(19) Europäisches Patentamt
European Patent Office
Office européen des brevets

(11) **EP 4 224 369 A1**

(12) **EUROPEAN PATENT APPLICATION**
published in accordance with Art. 153(4) EPC

(43) Date of publication:
**09.08.2023 Bulletin 2023/32**

(21) Application number: **21888222.3**

(22) Date of filing: **02.08.2021**

(51) International Patent Classification (IPC):
**G06N 3/04** (2023.01)

(52) Cooperative Patent Classification (CPC):
**G06F 18/00; G06N 3/04; G06N 20/00; H04L 67/02**

(86) International application number:
**PCT/CN2021/110111**

(87) International publication number:
**WO 2022/095523 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.11.2020 CN 202011212838**

(71) Applicant: **Huawei Technologies Co., Ltd.**
**Shenzhen, Guangdong 518129 (CN)**

(72) Inventor: **JIANG, Tao**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD, APPARATUS AND SYSTEM FOR MANAGING MACHINE LEARNING MODEL**

(57) A machine learning model management method and apparatus, and a system are provided, and relate to the field of machine learning technologies. The method is executed by a federated learning server, the federated learning server is in a first management domain, and the method includes: obtaining a first machine learning model from a machine learning model management center; performing federated learning with a plurality of federated learning clients in the first management domain based on the first machine learning model and local network service data in the first management domain, to obtain a second machine learning model; and sending the second machine learning model to the machine learning model management center, to enable the second machine learning model to be used by a device in a second management domain. This helps save computing resources and improve adaptivity of the machine learning model.

FIG. 10

EP 4 224 369 A1

## Description

This application claims priority to Chinese Patent Application No. 202011212838.9, filed with the China National Intellectual Property Administration on November 3, 2020 and entitled "MACHINE LEARNING MODEL MANAGEMENT METHOD AND APPARATUS, AND SYSTEM", which is incorporated herein by reference in its entirety.

## TECHNICAL FIELD

This application relates to the field of machine learning technologies, and in particular, to a machine learning model management method and apparatus, and a system.

## BACKGROUND

As an infrastructure of information communication, a telecommunications carrier network is an autonomous system that needs to be highly intelligent and automated. A machine learning model can provide powerful capabilities such as analysis, determining, and prediction. Therefore, applying the machine learning model to work such as planning, construction, maintenance, operation, and optimization on the telecommunications carrier network becomes a popular research in the industry.

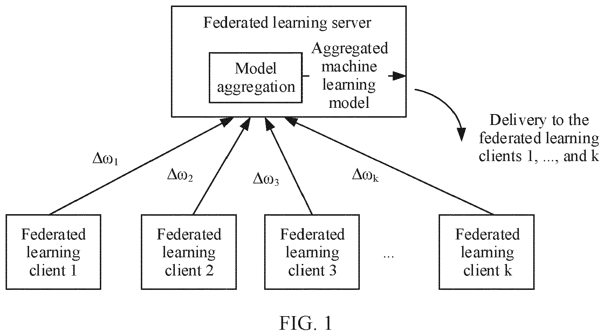

Federated learning (federated learning) is a distributed machine learning technology. As shown in FIG. 1, federated learning clients (federated learning clients, FLCs) such as federated learning clients 1, 2, 3, ..., and k perform model training by using local computing resources and local network service data, and send model parameter update information $\Delta\omega$ such as $\Delta\omega_1$, $\Delta\omega_2$, $\Delta\omega_3$, ..., and $\Delta\omega_k$ that is generated in local training processes to a federated learning server (federated learning server, FLS). The federated learning server performs model aggregation based on the model parameter update information by using an aggregation algorithm, to obtain an aggregated machine learning model. The aggregated machine learning model is used as an initial model on which the federated learning client is to perform model training next time. The federated learning client and the federated learning server perform the foregoing model training process for a plurality of times, and do not stop training until an obtained aggregated machine learning model meets a preset condition.

It can be learned from this that the parties participating in the federated learning need to centralize intermediate machine learning models or model parameter update information of the parties, to benefit from the federated learning. However, in the telecommunications field, according to regional policies/decrees or user requirements, network service data (including device data, network service data supported by a device, related user data, and the like) of the telecommunications carrier network requires privacy protection and cannot be leaked to a third party. Because features of the network service data of the telecommunications carrier network can be reversely deduced based on the intermediate machine learning model, the intermediate machine learning model cannot be leaked to the third party either. Therefore, telecommunications carrier networks can train only their own federated learning models respectively, and this not only wastes computing resources due to repeated training, but also reduces adaptivity of the federated learning models of the telecommunications carrier networks due to a limitation of the network service data.

For example, a service awareness (service awareness) service is a basic value-added service of a network, and the telecommunications carrier network may obtain, by identifying an application packet or statistical data of the application packet, an application category (for example, an application A or an application B) to which the application packet belongs, and subsequently perform different processing such as charging, traffic limiting, and bandwidth assurance for different applications. For example, the machine learning model corresponds to the service awareness service, in other words, the machine learning model is a service awareness machine learning model. A federated learning client is deployed on a network device of a telecommunications carrier network, and performs local training based on an application packet of the network device or statistical data of the application packet, to obtain an intermediate machine learning model. If the intermediate machine learning model or model parameter update information is leaked to a third party, the third party may reversely deduce the application packet of the network device or the statistical data of the application packet based on the intermediate machine learning model or the model parameter update information, where the application packet or the statistical data of the application packet is sensitive data. As a result, the telecommunications carrier network suffers from a security risk.

## SUMMARY

This application provides a machine learning model management method and apparatus, and a system, to save computing resources as a whole and help improve adaptivity of a federated learning model.

According to a first aspect, a machine learning model management method is provided, and is executed by a federated learning server, where the federated learning server is in a first management domain, and is connected to a machine learning model management center. The method includes: first, obtaining a first machine learning model from the machine learning model management center; then, performing federated learning with a plurality of federated learning clients in the first management domain based on the first machine learning model and local network service data in the first management domain, to obtain a second machine learning model; and next, sending the second machine learning model to the machine learning model management center, to enable the second machine learning model to be used by a device in a second management domain.

In this technical solution, a machine learning model obtained in a management domain may be used by a device in another management domain. In this way, the machine learning model does not need to be repeatedly trained in different management domains, to save computing resources in terms of the entire society.

In addition, as time goes by, a machine learning model on the machine learning model management center can integrate performance of network service data in a plurality of management domains (that is, the machine learning model is indirectly obtained through federated learning based on the network service data in the plurality of management domains), and has much better adaptivity (adaptivity) than a machine learning model obtained based on network service data only in a single management domain. For each management domain, a good effect can also be achieved on a model service that is executed by subsequently inputting more novel and more complex network service data.

Furthermore, the machine learning model is independently trained in each management domain, and the federated learning server obtains an initial machine learning model from the machine learning model management center. Therefore, even if a fault occurs on a federated learning server in a management domain, the federated learning server can still obtain, from the machine learning model management center when the fault is recovered, a currently latest machine learning model for sharing (namely, an updated machine learning model obtained by the machine learning model management center together with another federated learning server during the fault) as the initial machine learning model, to help reduce a quantity of times of federated learning, and accelerate convergence of the machine learning model. The machine learning model in this technical solution has a faster convergence speed and a stronger recovery capability after the fault on the federated learning server is recovered than a machine learning model in a conventional technology, in other words, has better robustness than the machine learning model in the conventional technology.

In a possible design, the obtaining a first machine learning model from the machine learning model management center includes: sending machine learning model requirement information to the machine learning model management center; and receiving the first machine learning model determined by the machine learning model management center based on the machine learning model requirement information.

That is, the federated learning server obtains the first machine learning model any time the federated learning server needs to use the first machine learning model. This helps save storage space of a device in which the federated learning server is located.

In a possible design, the machine learning model requirement information includes model service information corresponding to the machine learning model and/or a machine learning model training requirement.

In a possible design, the training requirement includes at least one of the following: a training environment, an algorithm type, a network structure, a training framework, an aggregation algorithm, or a security mode.

In a possible design, the method further includes: sending access permission information of the second machine learning model to the machine learning model management center.

That is, the federated learning server may autonomously determine access permission for the machine learning model obtained by the federated learning server through training, in other words, may autonomously determine a federated learning server that can use the machine learning model. Subsequently, the machine learning model management center may provide the second machine learning model for the federated learning server that has the access permission.

In a possible design, the method further includes: sending the second machine learning model to the plurality of federated learning clients. Then, the plurality of federated learning clients may execute, based on the second machine learning model, a model service corresponding to the second machine learning model. This possible design provides an example of applying the second machine learning model.

For example, assuming that the model service corresponding to the second machine learning model is a service awareness service, the plurality of federated learning clients may perform service awareness based on the second machine learning model.

In a possible design, the sending the second machine learning model to the machine learning model management center includes: sending the second machine learning model to the machine learning model management center if an application effect of the second machine learning model meets a preset condition.

Optionally, that an application effect of the second machine learning model meets a preset condition may be understood as: The application effect of the second machine learning model reaches a preset target.

This helps improve precision/accuracy of the machine learning model sent by the federated learning server to the machine learning model management center, to further shorten a convergence time period of the machine learning model when another federated learning client performs federated learning by using the machine learning model.

In a possible design, the performing federated learning with a plurality of federated learning clients in the first management domain based on the first machine learning model and local network service data in the first management domain, to obtain a second machine learning model includes: sending the first machine learning model to the plurality of federated learning clients in the first management domain, to enable each of the plurality of federated learning clients to perform federated learning based on the first machine learning model and network service data obtained by the federated learning client, to obtain an intermediate machine learning model of the federated learning client; and obtaining a plurality of intermediate machine learning models obtained by the plurality of federated learning clients, and aggregating the plurality of intermediate machine learning models to obtain the second machine learning model.

According to a second aspect, a machine learning model management method is provided, and is executed by a machine learning model management center, where the machine learning model management center is connected to a first federated learning server, and the first federated learning server is in a first management domain. The method includes: first, sending a first machine learning model to the first federated learning server; then, receiving a second machine learning model from the first federated learning server, where the second machine learning model is obtained by the first federated learning server by performing federated learning with a plurality of federated learning clients in the first management domain based on the first machine learning model and local network service data in the first management domain, and specifically, the second machine learning model is obtained by the first federated learning server by performing federated learning with the plurality of federated learning clients in the first management domain by using the first machine learning model as an initial machine learning model and based on the local network service data in the first management domain; and next, replacing the first machine learning model with the second machine learning model, to enable the second machine learning model to be used by a device in a second management domain.

In a possible design, before the sending a first machine learning model to the first federated learning server, the method further includes: receiving machine learning model requirement information sent by the first federated learning server; and determining the first machine learning model based on the machine learning model requirement information.

In a possible design, the machine learning model requirement information includes model service information corresponding to the machine learning model and/or a machine learning model training requirement.

In a possible design, the training requirement includes at least one of the following: a training environment, an algorithm type, a network structure, a training framework, an aggregation algorithm, or a security mode.

In a possible design, the second machine learning model is a machine learning model based on a first training framework. The method further includes: converting the second machine learning model into a third machine learning model, where the third machine learning model is a machine learning model based on a second training framework, and the third machine learning model and the second machine learning model correspond to same model service information.

In a possible design, the machine learning model management center further stores a fifth machine learning model, the fifth machine learning model is a machine learning model based on the second training framework, and the fifth machine learning model and the first machine learning model correspond to the same model service information. The method may further include: replacing the fifth machine learning model with the third machine learning model. This helps enable a machine learning model that is in another training framework and that corresponds to same model service information to be the latest.

In a possible design, the method further includes: receiving access permission information that is of the second machine learning model and that is sent by the first federated learning server.

In a possible design, the method further includes: sending the second machine learning model to a second federated learning server, where the second federated learning server is in the second management domain; receiving a fourth machine learning model from the second federated learning server, where the fourth machine learning model is obtained by the second federated learning server by performing federated learning with a plurality of federated learning clients based on the second machine learning model and local network service data; and replacing the second machine learning model with the fourth machine learning model. This possible design provides a specific implementation of using the second machine learning model by the device in the second management domain.

It may be understood that the corresponding method provided in the second aspect may correspond to the corresponding method provided in the first aspect. Therefore, for beneficial effects that can be achieved by the method provided in the second aspect, refer to the beneficial effects in the corresponding method provided in the first aspect. Details are not described herein again.

According to a third aspect, a federated learning system is provided, and includes a federated learning server and a plurality of federated learning clients. The federated learning server and the plurality of federated learning clients are in a first management domain, and the federated learning server is connected to a machine learning model management center. The federated learning server is configured to: obtain a first machine learning model from the machine learning model management center, and send the first machine learning model to the plurality of federated learning clients. Each of the plurality of federated learning clients is configured to perform federated learning based on the first machine learning model and network service data obtained by the federated learning client, to obtain an intermediate machine learning model of the federated learning client. The federated learning server is further configured to: obtain a plurality of intermediate machine learning models obtained by the plurality of federated learning clients, aggregate the plurality of intermediate machine learning models to obtain a second machine learning model, and send the second machine learning model to the machine learning model management center, to enable the second machine learning model to be used by a device in a second management domain.

In a possible design, the federated learning server is further configured to send the second machine learning model to the plurality of federated learning clients. The plurality of federated learning clients are further configured to execute, based on the second machine learning model, a model service corresponding to the second machine learning model.

According to a fourth aspect, a network system is provided, and includes a machine learning model management center, a federated learning server, and a plurality of federated learning clients. The federated learning server and the plurality of federated learning clients are in a first management domain, and the federated learning server is connected to the machine learning model management center. The machine learning model management center is configured to send a first machine learning model to the federated learning server. The federated learning server is configured to send the first machine learning model to the plurality of federated learning clients. Each of the plurality of federated learning clients is configured to perform federated learning based on the first machine learning model and network service data obtained by the federated learning client, to obtain an intermediate machine learning model of the federated learning client. The federated learning server is further configured to: obtain a plurality of intermediate machine learning models obtained by the plurality of federated learning clients, aggregate the plurality of intermediate machine learning models to obtain a second machine learning model, and send the second machine learning model to the machine learning model management center, to enable the second machine learning model to be used by a device in a second management domain. The machine learning model management center is further configured to replace the first machine learning model with the second machine learning model.

In a possible design, the federated learning server is further configured to send machine learning model requirement information to the machine learning model management center. The machine learning model management center is further configured to send the first machine learning model to the federated learning server based on the machine learning model requirement information.

In a possible design, the machine learning model requirement information includes model service information corresponding to the machine learning model and/or a machine learning model training requirement.

In a possible design, the training requirement includes at least one of the following: a training environment, an algorithm type, a network structure, a training framework, an aggregation algorithm, or a security mode.

In a possible design, the second machine learning model is a machine learning model based on a first training framework. The machine learning model management center is further configured to convert the second machine learning model into a third machine learning model, where the third machine learning model is a machine learning model based on a second training framework, and the third machine learning model and the second machine learning model correspond to same model service information.

In a possible design, the machine learning model management center further stores a fifth machine learning model, the fifth machine learning model is a machine learning model based on the second training framework, and the fifth machine learning model and the first machine learning model correspond to the same model service information. The machine learning model management center is further configured to replace the fifth machine learning model with the third machine learning model.

In a possible design, the federated learning server is further configured to send the second machine learning model to the plurality of federated learning clients. The plurality of federated learning clients are further configured to execute, based on the second machine learning model, a model service corresponding to the second machine learning model.

According to a fifth aspect, this application provides a machine learning model management apparatus. The machine learning model management apparatus is configured to perform any method provided in the first aspect. In this case, the machine learning model management apparatus may be specifically a federated learning server.

In a possible design manner, in this application, the machine learning model management apparatus may be divided into functional modules according to any method provided in the first aspect. For example, each functional module may be obtained through division based on a corresponding function, or two or more functions may be integrated into one processing module.

For example, in this application, the machine learning model management apparatus may be divided into a transceiver unit, a processing unit, and the like based on functions. For descriptions of possible technical solutions performed by the functional modules obtained through division and beneficial effects achieved by the functional modules, refer to the technical solutions provided in the first aspect or the corresponding possible designs of the first aspect. Details are not described herein again.

In another possible design, the machine learning model management apparatus includes a memory and a processor, and the memory is coupled to the processor. The memory is configured to store computer instructions. The processor is configured to invoke the computer instructions, to perform any method according to any one of the first aspect or the possible design manners of the first aspect.

According to a sixth aspect, this application provides a machine learning model management apparatus. The machine learning model management apparatus is configured to perform any method provided in the second aspect. In this case, the machine learning model management apparatus may be specifically a machine learning model management center.

In a possible design manner, in this application, the machine learning model management apparatus may be divided into functional modules according to any method provided in the second aspect. For example, each functional module may be obtained through division based on a corresponding function, or two or more functions may be integrated into one processing module.

For example, in this application, the machine learning model management apparatus may be divided into a receiving unit, a sending unit, a processing unit, and the like based on functions. For descriptions of possible technical solutions performed by the functional modules obtained through division and beneficial effects achieved by the functional modules, refer to the technical solutions provided in the second aspect or the corresponding possible designs of the second aspect. Details are not described herein again.

In another possible design, the machine learning model management apparatus includes a memory and a processor, and the memory is coupled to the processor. The memory is configured to store computer instructions. The processor is configured to invoke the computer instructions, to perform any method according to any one of the second aspect or the possible design manners of the second aspect.

According to a seventh aspect, this application provides a computer-readable storage medium, for example, a non-transient computer-readable storage medium. The computer-readable storage medium stores a computer program (or instructions). When the computer program (or the instructions) is/are run on a computer device, the computer device is enabled to perform any method according to any possible implementation of the first aspect or the second aspect.

According to an eighth aspect, this application provides a computer program product. When the computer program product runs on a computer device, any method according to any possible implementation of the first aspect or the second aspect is performed.

According to a ninth aspect, this application provides a chip system, including a processor. The processor is configured to invoke, from a memory, a computer program stored in the memory, and run the computer program, to perform any method according to the implementations of the first aspect or the second aspect.

It may be understood that, in any technical solution provided in the another possible design of the fifth aspect, the another possible design of the sixth aspect, or the seventh to the ninth aspects, the sending action in the first aspect or the second aspect may be specifically replaced with sending performed under control of the processor, and the receiving action in the first aspect or the second aspect may be specifically replaced with receiving performed under control of the processor.

It may be understood that any system, apparatus, computer storage medium, computer program product, chip system, or the like provided above may be used in the corresponding method provided in the first aspect or the second aspect. Therefore, for beneficial effects that can be achieved by the system, apparatus, computer storage medium, computer program product, chip system, or the like, refer to the beneficial effects in the corresponding method. Details are not described herein again.

In this application, a name of any apparatus above does not constitute any limitation on the devices or functional modules. During actual implementation, these devices or functional modules may have other names. Each device or functional module falls within the scope defined by the claims and their equivalent technologies in this application, provided that a function of the device or functional module is similar to that described in this application.

These aspects or other aspects in this application are more concise and comprehensible in the following descriptions.

**BRIEF DESCRIPTION OF DRAWINGS**

FIG. 1 is a schematic diagram of a structure of a federated learning system applicable to an embodiment of this application;

FIG. 2 is a schematic diagram of a structure of a network system according to an embodiment of this application;

FIG. 3 is a schematic diagram of a structure of a machine learning model management system according to an embodiment of this application;

FIG. 4 is a schematic diagram of a system structure of a network system in which a machine learning model management system is used according to an embodiment of this application;

FIG. 5 is a schematic diagram of a logical structure of a public cloud according to an embodiment of this application;

FIG. 6 is a schematic diagram of a logical structure of a management and control system according to an embodiment of this application;

FIG. 7 is a schematic diagram of a logical structure of a network device according to an embodiment of this application;

FIG. 8 is a schematic diagram of another system structure of a network system in which a machine learning model management system is used according to an embodiment of this application;

FIG. 9 is a schematic diagram of a hardware structure of a computer device according to an embodiment of this application;

FIG. 10 is a schematic diagram of interaction in a machine learning model management method according to an embodiment of this application;

FIG. 11A and FIG. 11B are a schematic flowchart of a federated learning process according to an embodiment of this application;

FIG. 12A and FIG. 12B are a schematic diagram of interaction in another machine learning model management method according to an embodiment of this application;

FIG. 13 is a schematic diagram of a structure of a machine learning model management center according to an embodiment of this application; and

FIG. 14 is a schematic diagram of a structure of a federated learning server according to an embodiment of this application.

## DESCRIPTION OF EMBODIMENTS

The following describes some terms and technologies in embodiments of this application.

(1) Network service, network service data, model service, and model service information:

The network service is a communication service that can be provided by a network or a network device, for example, is a broadband service, a network slice service, or a virtual network service.

The network service data is data generated during running of the network service or data related to the generated data, for example, is an application packet, statistical data of the application packet (for example, a packet loss rate of the packet), or fault alarm information.

The model service is a service that can be provided based on a machine learning model and the network service data, for example, is a service awareness service, a fault tracing and prediction service, or a key performance indicator (key performance indicator, KPI) anomaly detection (anomaly detection) service. If a model service corresponding to the machine learning model is the service awareness service, corresponding network service data includes the application packet or the statistical data of the application packet. If a model service corresponding to the machine learning model is the fault tracing and prediction service, corresponding network service data includes the fault alarm information.

The model service information is information related to the model service, and includes an identifier, a type, or the like of the model service.

(2) Machine learning, machine learning model, and machine learning model file:

The machine learning means parsing data by using an algorithm, learning from the data, and making a decision and prediction on an event in the real world. The machine learning is performing "training" by using a large amount of data, and learning, from the data by using various algorithms, how to complete a model service.

In some examples, the machine learning model is a file that includes algorithm implementation code and parameters for completing a model service. The algorithm implementation code is used to describe a model structure of the machine learning model, and the parameters are used to describe an attribute of each component of the machine learning model. For ease of description, the file is referred to as the machine learning model file below. For example, sending a machine learning model in the following specifically means sending a machine learning model file.

In some other examples, the machine learning model is a logical function module for completing a model service. For example, a value of an input parameter is input into the machine learning model, to obtain a value of an output parameter of the machine learning model.

The machine learning model includes an artificial intelligence (artificial intelligence, AI) model, for example, a neural network model.

It should be noted that, in embodiments of this application, a machine learning model obtained through training in a federated learning system may also be referred to as a federated learning model.

(3) Machine learning model package

The machine learning model package contains the machine learning model (namely, the machine learning model file) and a description file of the machine learning model. The description file of the machine learning model may include description information of the machine learning model, a running script of the machine learning model, and the like.

The description information of the machine learning model is information for describing the machine learning model.

Optionally, the description information of the machine learning model may include at least one of model service information corresponding to the machine learning model or a machine learning model training requirement.

The model service information may include a model service type or a model service identifier.

For example, if a machine learning model is used for service awareness, a model service type corresponding to the machine learning model is a service awareness type. For another example, if a machine learning model is used for fault prediction, a model service type corresponding to the machine learning model is a fault prediction type.

Different model services that belong to a same model service type have different model service identifiers. For example, a machine learning model 1 corresponds to a service awareness service 1, and is used to identify an application in an application set A; a machine learning model 2 corresponds to a service awareness service 2, and is used to identify an application in an application set B. The application set A is different from the application set B.

The training requirement may include at least one of the following: a training environment, an algorithm type, a network structure, a training framework, an aggregation algorithm, a security mode, or the like.

The training environment is a type of a device for training the machine learning model. Using an example in which technical solutions provided in embodiments of this application are applied to a core network, the training environment may include an external PCEF support node (external PCEF support node, EPSN), universal customer premises equipment (universal customer premises equipment, uCPE), an IP multimedia subsystem (IP multimedia subsystem, IMS), or the like. The PCEF is short for a policy and charging enforcement function (policy and charging enforcement function). The IP is short for internet protocol (internet protocol).

The algorithm type is a type of an algorithm for training the machine learning model, for example, is a neural network or linear regression. Further, a type of the neural network may include a convolutional neural network (convolutional neural network, CNN), a long short-term memory (long short-term memory, LSTM) network, a recurrent neural network (recurrent neural network, RNN), or the like.

The network structure is a network structure corresponding to the machine learning model. Using an example in which the algorithm type is the neural network, the network structure may include a feature (for example, a dimension) of an input (input) layer, a feature (for example, a dimension) of an output (output) layer, a feature (for example, a dimension) of a hidden layer (hidden layer), and the like.

The training framework may also be referred to as a machine learning framework (machine learning framework), is a training framework used for training the machine learning model, and specifically integrates all machine learning systems or methods including a machine learning algorithm, where the machine learning systems or methods include a data representation and data processing method, a data representation and machine learning model building method, a modeling result evaluation and use method, and the like. Using an example in which the algorithm type is the neural network, the training framework may include a convolutional architecture for fast feature embedding (convolutional architecture for fast feature embedding, Caffe) training framework, a TensorFlow training framework, a Pytorch training framework, or the like.

The aggregation algorithm is an algorithm for training the machine learning model, and is specifically an algorithm used in a process in which a federated learning server performs model aggregation on a plurality of intermediate machine learning models during model training in a federated learning system. For example, the aggregation algorithm may include a weighted averaging algorithm or a federated stochastic variance reduced gradient (federated stochastic variance reduced gradient, FSVRG) algorithm.

The security mode is a security means (for example, an encryption algorithm) used in a machine learning model transmission process. Optionally, a security mode requirement may include whether to use the security mode. Further optionally, if the security mode is to be used, the security mode requirement may include a specific type of the security mode to be used. For example, the security mode may include secure multi-party computation (secure multi-party computation, MPC) or a secure hash algorithm (secure hash algorithm, SHA) 256.

Optionally, the description file of the machine learning model may further include access permission for the machine learning model, a charging policy for the machine learning model, and/or the like. The access permission may be replaced with share permission.

Optionally, the access permission for the machine learning model may include whether the machine learning model can be shared, that is, whether the machine learning model can be used by another federated learning server. Further optionally, the access permission for the machine learning model may further include: in a case in which the machine learning model can be shared, a specific federated learning server or specific federated learning servers that can use the machine learning model, and/or a specific federated learning server or specific federated learning servers that cannot use the machine learning model.

The charging policy for the machine learning model is a payment policy that needs to be complied with when the machine learning model is used.

(4) Training sample and test sample

In machine learning, samples include the training sample and the test sample. The training sample is a sample for training the machine learning model. The test sample is a sample for testing a measurement error (or accuracy) of the machine learning model.

5. Other Terms

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a related concept in a specific manner.

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

The term "at least one" in this application means one or more, and the term "a plurality of" in this application means two or more than two. For example, "a plurality of second packets" means two or more than two second packets.

It should be understood that the terms used in the descriptions of various examples in this specification are merely intended to describe specific examples but are not intended to constitute a limitation. The terms "one" ("a" and "an") and "the" of singular forms used in the descriptions of various examples and the appended claims are also intended to include plural forms, unless otherwise specified in the context clearly.

It should be further understood that, the term "and/or" used in this specification indicates and includes any or all possible combinations of one or more items in associated listed items. The term "and/or" describes an association relationship between associated objects and represents that three relationships may exist. For example, A and/or B may represent the following three cases: Only A exists, both A and B exist, and only B exists. In addition, the character "/" in this application generally indicates an "or" relationship between associated objects.

It should be further understood that sequence numbers of processes do not mean execution sequences in various embodiments of this application. The execution sequences of the processes should be determined based on functions and internal logic of the processes, and should not be construed as any limitation on the implementation processes of embodiments of this application.

It should be understood that determining B based on A does not mean that B is determined based on only A, but B may alternatively be determined based on A and/or other information.

It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that the term "if" may be interpreted as a meaning "when" ("when" or "upon"), "in response to determining", or "in response to detecting". Similarly, according to the context, the phrase "if it is determined that" or "if (a stated condition or event) is detected" may be interpreted as a meaning of "when it is determined that", "in response to determining", "when (a stated condition or event) is detected", or "in response to detecting (a stated condition or event)".

It should be understood that "one embodiment", "an embodiment", or "a possible implementation" mentioned throughout this specification means that particular features, structures, or characteristics related to embodiments or implementations are included in at least one embodiment of this application. Therefore, "in one embodiment", "in an embodiment", or "in a possible implementation" appearing throughout this specification does not necessarily refer to a same embodiment. In addition, these particular features, structures, or characteristics may be combined in one or more embodiments in any proper manner.

It should be further understood that a "connection" in embodiments of this application may be a direct connection, an indirect connection, a wired connection, or a wireless connection. In other words, a manner of a connection between devices is not limited in embodiments of this application.

With reference to the accompanying drawings, the following describes the technical solutions provided in embodiments of this application.

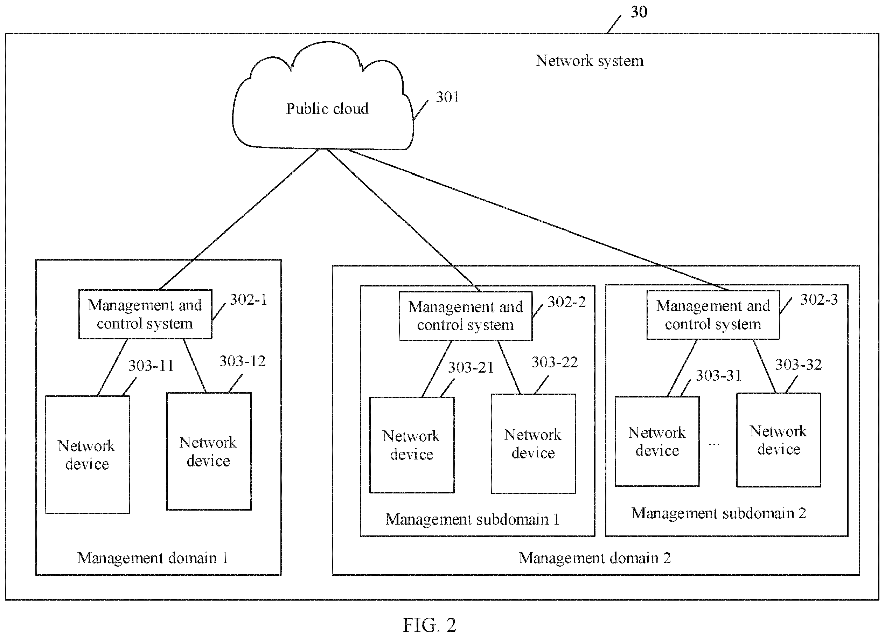

FIG. 2 is a schematic diagram of a structure of a network system 30 according to an embodiment of this application. The network system 30 shown in FIG. 2 may include a cloud platform (which provides a computing resource service and is not shown in the figure and on which a network application may be deployed) and at least two management domains, such as a management domain 1 and a management domain 2, that are connected to the cloud platform. The cloud platform may be a public cloud 301, another type of cloud platform, or another network platform on which a network application may be deployed. For ease of description, the following uses the public cloud 301 as an example for description.

For example, the management domain may be a telecommunications carrier network, a virtual carrier network, an enterprise network (for example, a network system in an industry such as a bank, a government, or a large enterprise), or a campus network.

Optionally, different management domains are isolated from each other in terms of security, and do not share "network service data" or an "intermediate machine learning model" with each other. For a definition of the intermediate machine learning model, refer to the following related descriptions of S102. Different management domains may be different telecommunications carrier networks, different virtual carrier networks, different enterprise networks, or the like.

In some embodiments, one management domain includes one or more management and control systems, for example, a management and control system 302-1, a management and control system 302-2, and a management and control system 302-3 in FIG. 2, and one or more network devices connected to each management and control system. For example, the management and control system 302-1 in FIG. 2 is connected to a network device 303-11 and a network device 303-12, the management and control system 302-2 is connected to a network device 303-21 and a network device 303-22, and the management and control system 302-3 is connected to a network device 303-31 and a network device 303-32.

The management and control system may be directly or indirectly connected to the network device.

The public cloud 301 may be constructed and operated by a network device manufacturer or another third-party vendor, and communicates with each management domain in a cloud service manner.

The management and control system is responsible for managing and maintaining in an entire life cycle of a single management domain. For example, the management and control system may be a core network management and control system, an access network management and control system, or a transport network management and control system. For example, when the management domain is specifically the telecommunications carrier network, the management and control system may be a network management system (network management system, NMS), an element management system (element management system, EMS), or an operations support system (operations support system, OSS).

Optionally, there may be a plurality of management and control systems in one management domain, to manage different management subdomains. A management domain in one area (for example, one district of a city) is referred to as a management subdomain. For example, a telecommunications carrier network in one district of a city is used as a telecommunications carrier sub-network. Different management subdomains are geographically isolated.

For example, the management domain 2 in FIG. 2 includes a management subdomain 1, a management subdomain 2, and the like. Each management subdomain includes one management and control system, and each management and control system is connected to a plurality of network devices.

The network device is responsible for reporting, to the management and control system, network service data in a management domain or a management subdomain in which the network device is located, such as alarm data, a performance indicator, a run log, or traffic statistics (traffic statistics) of the network device, and executing a management and control instruction delivered by the management and control system. For example, the network device may be a router, a switch, an optical line terminal (optical line terminal, OLT), a base station, or a core network device. The network device may provide a computing resource and an algorithm environment for training a machine learning model, and have a data storage and processing capability (for example, a capability of training the machine learning model).

FIG. 1 is a schematic diagram of a structure of a federated learning system applicable to an embodiment of this application. The federated learning system includes a federated learning server and a plurality of federated learning clients directly or indirectly connected to the federated learning server.

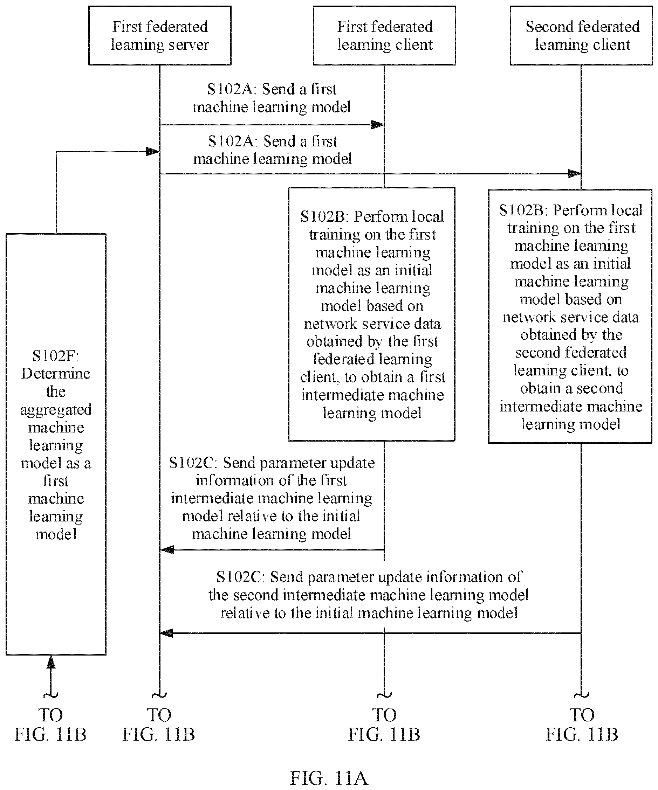

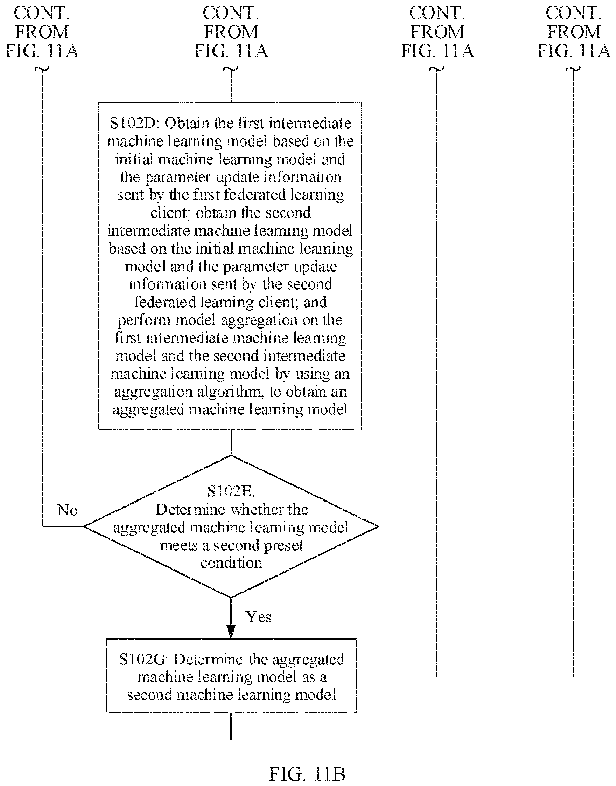

For a process in which the federated learning server collaborates with the plurality of federated learning clients to perform federated learning, refer to a method procedure corresponding to FIG. 11A and FIG. 11B. In addition, the federated learning server further manages the federated learning system, for example, determines a federated learning client that is to participate in training, generates a training instance, and is responsible for communication security, privacy protection, and training system reliability assurance.

The federated learning server and the federated learning clients may be specifically logical function modules.

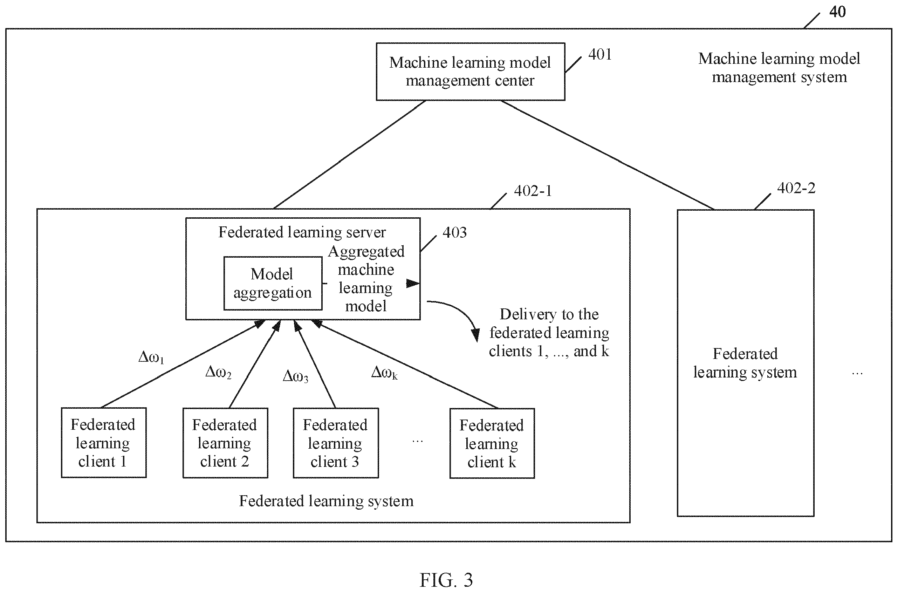

FIG. 3 is a schematic diagram of a structure of a machine learning model management system 40 according to an embodiment of this application.

The machine learning model management system 40 shown in FIG. 3 includes a machine learning model management center 401 and a plurality of federated learning systems, such as a federated learning system 402-1 and a federated learning system 402-2, that are connected to the machine learning model management center 401. Each federated learning system may include a federated learning server 403 and federated learning clients 1 to k.

The machine learning model management center 401 is configured to manage a machine learning model and provide the machine learning model for the federated learning system. The machine learning model managed by the machine learning model management center 401 may be used by a plurality of federated learning systems. Management of the machine learning model may include: generating a machine learning model package according to a machine learning model specification in the federated learning system, generating a signature file and the like for the machine learning model package, and storing the machine learning model package in a machine learning model market for another federated learning server to download and use.

Table 1 lists an example of a machine learning model package in a machine learning model market according to this embodiment of this application.

**Table 1**

| Identifier of a machine learning model | Machine learning model package | |
|---|---|---|
| Machine learning model 1 | Model package of the machine learning model 1 | Machine learning model file 1 |
| | | Description file of the machine learning model file 1 |
| Machine learning model 2 | Model package of the machine learning model 2 | Machine learning model file 2 |
| | | Description file of the machine learning model file 2 |
| Machine learning model 3 | Model package of the machine learning model 3 | Machine learning model file 3 |
| | | Description file of the machine learning model file 3 |
| Machine learning model 4 | Model package of the machine learning model 4 | Machine learning model file 4 |
| | | Description file of the machine learning model file 4 |

Each federated learning system is configured to: perform federated learning based on the machine learning model (namely, a first machine learning model) delivered by the machine learning model management center 401, and report a federated learning result (namely, a second machine learning model) to the machine learning model management center 401.

In an example, the machine learning model management center 401 may communicate with the federated learning server in the federated learning system over the representational state transfer (representational state transfer, REST) protocol.

The machine learning model management center 401 may be specifically a logical function module.

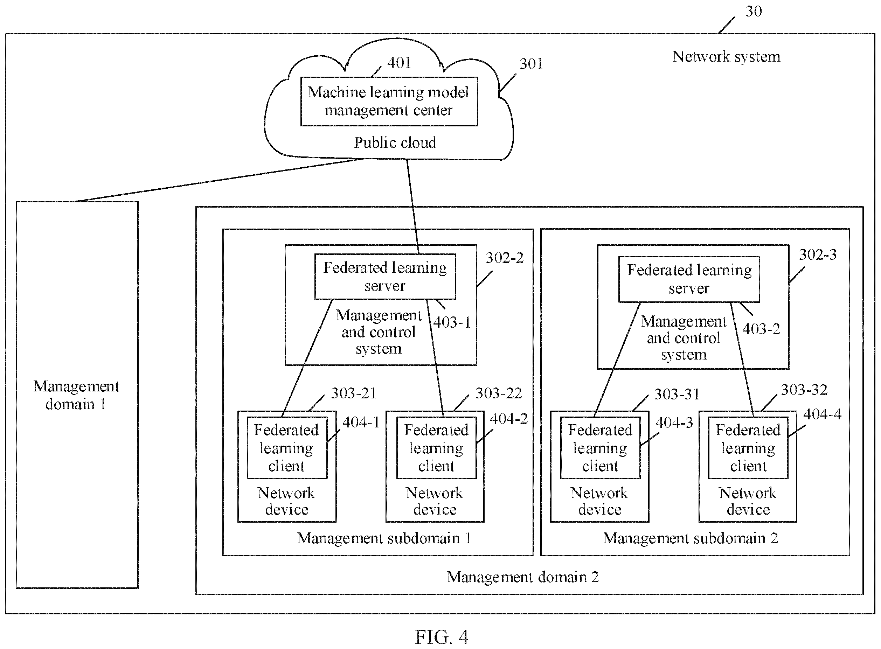

FIG. 4 is a schematic diagram of a system structure of the network system 30 in which the machine learning model management system 40 is used according to an embodiment of this application.

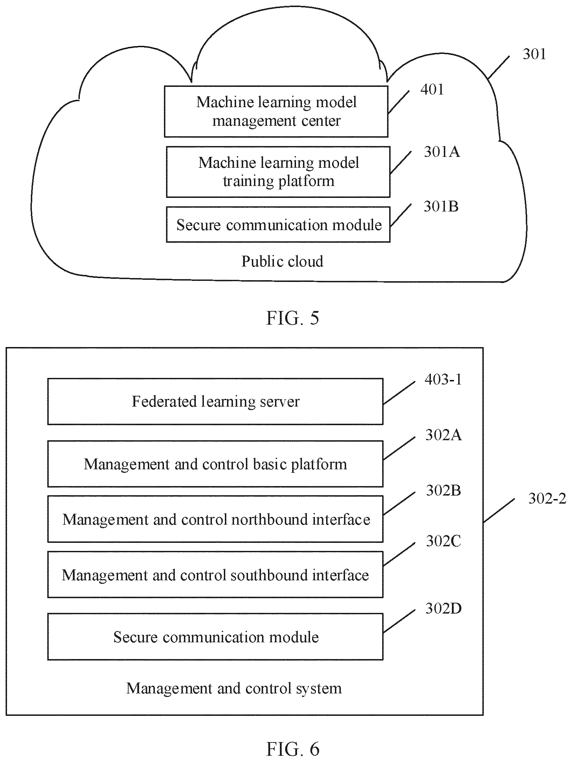

In FIG. 4, the machine learning model management center 401 is deployed on the public cloud 301, to provide a machine learning model management service for different management domains. In addition, as shown in FIG. 5, the public cloud 301 may further include the following:

Machine learning model training platform 301A: which is configured to: provide a computing resource, a machine learning algorithm framework, a training algorithm, a machine learning model debugging tool, and the like that are required for training a machine learning model, and provide functions such as data governance, feature engineering, machine learning algorithm selection, machine learning model parameter optimization, and machine learning model evaluation and testing that are required for training the machine learning model. For example, the machine learning model training platform 301A may complete, for the management domain, training of a machine learning model (for example, an aggregated machine learning model) corresponding to a model service.

Secure communication module 301B: which is configured to provide a capability of secure communication between the public cloud 301 and the management and control system. For example, the secure communication module 301B is configured to encrypt information transmitted between the public cloud 301 and the management and control system.

After the machine learning model management center 401 is deployed on the public cloud 301, the machine learning model management center 401 may reuse resources of the public cloud 301, such as a computing resource and/or a communication resource. For example, with reference to FIG. 5, the machine learning model management center 401 may complete, on the machine learning model training platform 301A, training of a machine learning model corresponding to a model service, and then provide the machine learning model for another management domain. For another example, with reference to FIG. 5, the secure communication module 301B is configured to provide a capability of secure communication between the machine learning model management center 401 on the public cloud 301 and the federated learning server in the management and control system. For example, the secure communication module 301B is configured to encrypt a machine learning model (or a machine learning model package) transmitted between the machine learning model management center 401 and the federated learning server.

In FIG. 4, the federated learning server is deployed on the management and control system. For example, a federated learning server 403-1 is deployed on the management and control system 302-2, and a federated learning server 403-2 is deployed on the management and control system 302-3. In addition, as shown in FIG. 6, the management and control system (for example, the management and control system 302-2) may further include the following:

Management and control basic platform 302A: which is configured to: provide a computing resource, a communication resource, and an external management and control interface for the federated learning client, and provide another software system capability.

Management and control northbound interface 302B: which is used by the management and control system to communicate with the public cloud 301.

Management and control southbound interface 302C: which is used by the management and control system to communicate with the network device. The management and control southbound interface 302C may include: a Google remote procedure call RPC (google remote procedure call, gRPC) interface, a representational state transfer (representational state transfer, REST) interface, or the like.

Secure communication module 302D: which is configured to provide a capability of secure communication between the management and control system and the public cloud 301 and a capability of secure communication between the management and control system and the network device. For example, the secure communication module 302D is configured to: encrypt information transmitted between the management and control system and the public cloud 301, and encrypt information transmitted between the management and control system and the network device.

It should be noted that the secure communication module 302D may include a first submodule and a second submodule. The first submodule is configured to provide the capability of the secure communication between the management and control system and the public cloud 301. The function of the first submodule corresponds to the function of the foregoing secure communication module 301B. The second submodule is configured to provide the capability of the secure communication between the management and control system and the network device. The function of the second submodule corresponds to a function of the following secure communication module 303C.

After the federated learning server is deployed on the management and control system, the federated learning server may reuse resources of the management and control system, such as a computing resource and/or a communication resource. For example, with reference to FIG. 6, the management and control basic platform 302A is configured to: provide the federated learning server with a computing resource or a communication resource for running, and provide an external management and control interface for the federated learning server. A user can manage and configure the federated learning system on the control interface. The management and control basic platform 302A is further configured to provide another required software system capability, for example, user authentication, a security certificate, or permission management, for the federated learning server. For another example, with reference to FIG. 6, the federated learning server may communicate with the machine learning model management center 401 on the public cloud 301 through the management and control northbound interface 302B. For still another example, with reference to FIG. 6, the federated learning server may communicate with the federated learning client on the network device through the management and control southbound interface 302C.

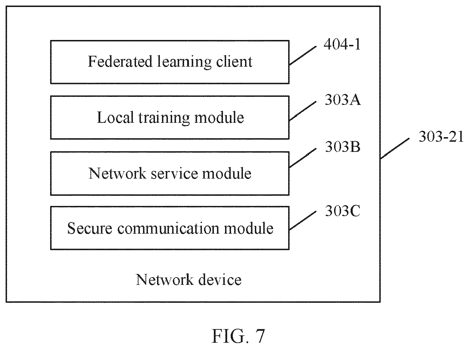

In FIG. 4, the federated learning client is deployed on the network device. For example, a federated learning client 404-1 is deployed on the network device 303-21, a federated learning client 404-2 is deployed on the network device 303-22, a federated learning client 404-3 is deployed on the network device 303-31, and a federated learning client 404-4 is deployed on the network device 303-32. In addition, as shown in FIG. 7, the network device (for example, the network device 303-21) may further include the following:

Local training module 303A: which has a computing capability for local training, a local data processing capability, and a training algorithm framework, for example, a TensorFlow training framework or a Caffe training framework.

Network service module 303B: which is configured to perform a network service processing procedure of the network device, for example, perform functions such as packet forwarding based on an inference result of the machine learning model (namely, output information of the machine learning model), where control information in the network service processing procedure may come from the inference result. The network service module 303B further needs to send network service data, such as a performance indicator or alarm data, that is generated in a network service running process to the local training module 303A, so that the local training module 303A performs model update and optimization.

Secure communication module 303C: which is configured to provide a capability of secure communication between the management and control system and the network device. For example, the secure communication module 303C is configured to encrypt information transmitted between the management and control system and the network device.

After the federated learning client is deployed on the network device, the federated learning client may reuse resources of the network device, such as a computing resource and/or a communication resource. For example, with reference to FIG. 7, the federated learning client serves as a communication interface and a management interface between the local training module 303A and the federated learning server. Specifically, the federated learning client establishes secure communication with the federated learning server, downloads an aggregated machine learning model, uploads parameter update information between an intermediate machine learning model and an initial machine learning model, collaboratively controls a local algorithm by using a training policy, and so on. As a local agent of the federated learning system, the federated learning client performs local management, including system access, security authentication, startup and loading, and the like of a federated learning local node. The federated learning client also performs security and privacy protection on the federated learning local node, including data encryption, privacy protection, and multi-party computation.

Optionally, the management and control system may further include the local training module 303A. In this case, the network device may not include the local training module 303A.

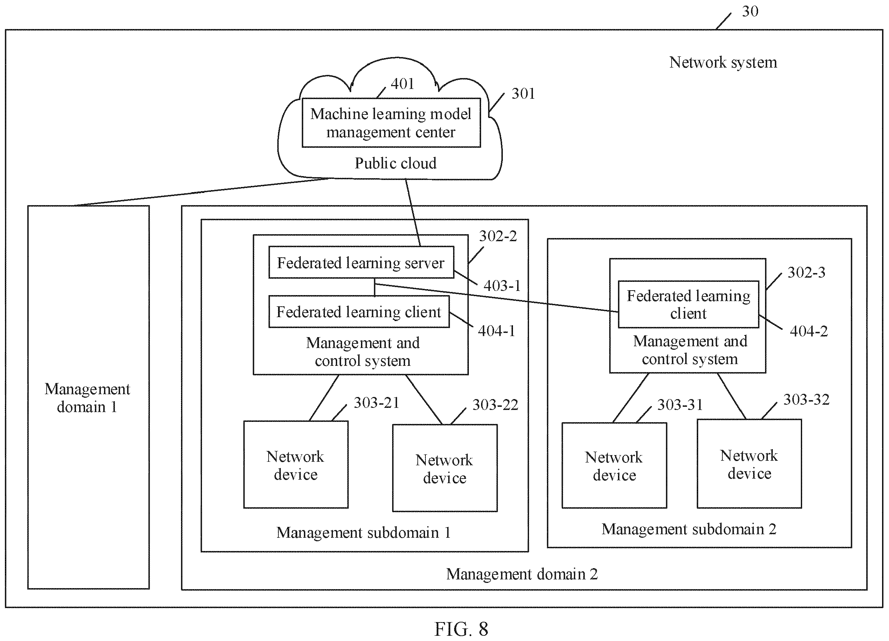

FIG. 8 is a schematic diagram of another system structure of the network system 30 in which the machine learning model management system 40 is used according to an embodiment of this application. In FIG. 8, the machine learning model management center 401 is deployed on the public cloud 301. Both the federated learning server and the federated learning client are deployed on the management and control system. For example, a federated learning server 403-1 and a federated learning client 404-1 are deployed on the management and control system 302-2, and a federated learning client 404-2 is deployed on the management and control system 302-3.

The system shown in FIG. 8 is used in a scenario in which one management domain (for example, the management domain 2 in FIG. 2) includes a plurality of management subdomains. In this scenario, optionally, a federated learning server is deployed on a management and control system in a management domain, and a federated learning client connected to the federated learning server is deployed on another management and control system. Further optionally, a federated learning client connected to the federated learning server may or may not be deployed on the management and control system on which the federated learning server is deployed.

In the network architecture shown in FIG. 8, the management and control system is responsible for management domain-level (or network-level) information management such as management domain-level fault analysis, a management domain-level optimization policy, and management domain-level capacity management in the management subdomain. The management and control system may perform local training based on a management subdomain-granularity training sample. A typical application is, for example, management domain-level indicator anomaly detection. Specifically, the management and control system performs centralized training on performance indicators reported by all managed network devices, to generate a management domain-level machine learning model for indicator anomaly detection.

Compared with the network architecture shown in FIG. 4, the network architecture shown in FIG. 8 supports deployment of the federated learning server and the federated learning client on a same management and control system, and extends network device-granularity model training to management domain-granularity model training. This extends an application range of federated learning to train and optimize a management domain-level machine learning model. In addition, this helps resolve problems such as insufficient precision of, an insufficient generalization capability of, a long data collection time period for, and large manual input for a machine learning model obtained through training that are caused by a small quantity of training samples in the network device-granularity model training.

It should be noted that FIG. 4 and FIG. 8 may alternatively be used in combination. For example, model training is performed at a network device granularity in some management domains, and is performed at a management domain granularity in some other management domains, to form a new embodiment.

Differences from a conventional technology lie in: In the network architectures shown in FIG. 4 and FIG. 8, a training process of a machine learning model is completed in a management domain, and network service data is not sent to outside the management domain. This helps improve security of the network service data in the management domain. Moreover, the machine learning model is shared between management domains. In this way, the machine learning model does not need to be repeatedly trained in different management domains, to save computing resources in terms of the entire society, and reduce construction costs and maintenance costs for each management domain (for example, each telecommunications carrier network).

Further, in a case of mutual sharing, federated learning may start to be performed in different management domains based on a latest machine learning model. In this way, processing processes such as data sample collection, data governance, feature engineering, model training, and model testing are omitted, thereby greatly shortening a model update periodicity.

In addition, in the network architectures shown in FIG. 4 and FIG. 8, the federated learning system may reuse resources (such as a computing resource or a communication resource) in an existing network system. This helps reduce a change of the network system caused by introduction of the federated learning system, and no communication security management measure such as firewall or jump server needs to be added.

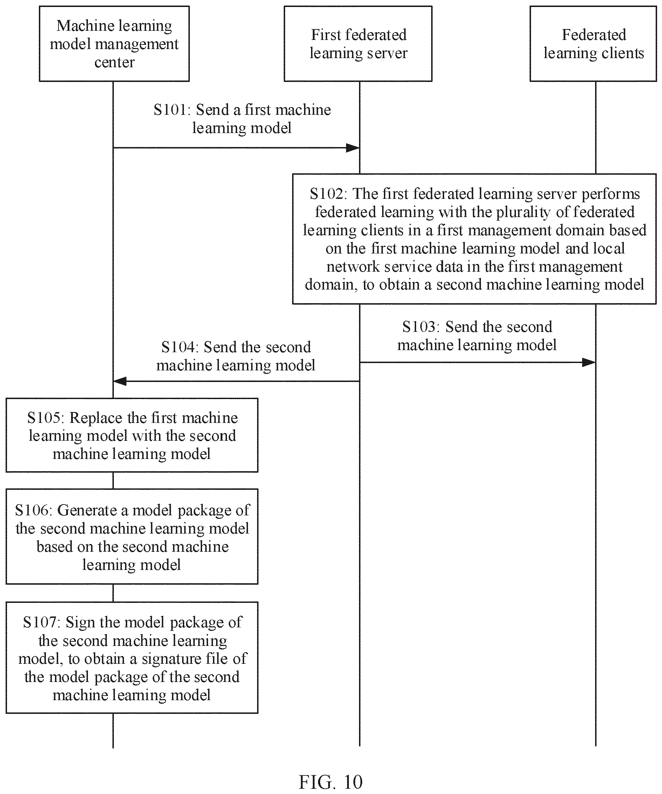

It should be noted that, for related functions of each device/functional module in any federated learning system and any network architecture provided above, refer to related steps in a machine learning model management method (for example, a machine learning model management method shown in FIG. 10) provided below. Details are not described herein again.

In some embodiments, one management domain includes one or more network devices. The public cloud 301 controls the one or more network devices. Based on the embodiments, the machine learning model management center may be deployed on the public cloud 301, and the federated learning client may be deployed on the network device. The machine learning model management center is configured to directly control the federated learning client without using the federated learning server.

In hardware implementation, the public cloud 301 or the management and control system may be implemented by one device, or may be collaboratively implemented by a plurality of devices. This is not limited in embodiments of this application.

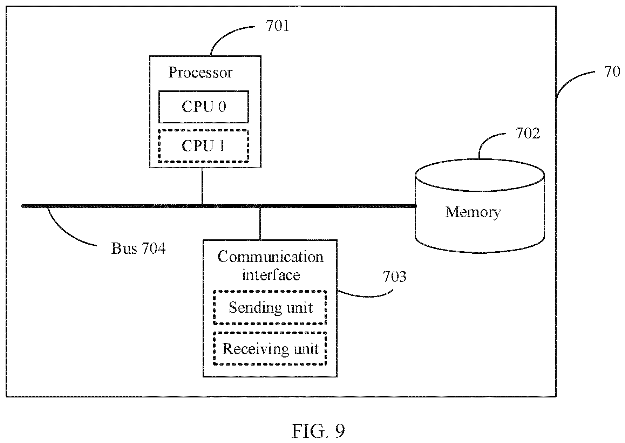

FIG. 9 is a schematic diagram of a hardware structure of a computer device 70 according to an embodiment of this application. The computer device 70 may be configured to implement a function of a device on which the machine learning model management center 401, a federated learning server, or a federated learning client is deployed. For example, the computer device 70 may be configured to implement a part or all of functions of the public cloud 301 or the management and control system, or may be configured to implement a function of the network device.

The computer device 70 shown in FIG. 9 may include a processor 701, a memory 702, a communication interface 703, and a bus 704. The processor 701, the memory 702, and the communication interface 703 may be connected to each other through the bus 704.

The processor 701 is a control center of the computer device 70, and may be a general-purpose central processing unit (central processing unit, CPU), another general-purpose processor, or the like. The general-purpose processor may be a microprocessor, any conventional processor, or the like.

In an example, the processor 701 may include one or more CPUs, for example, a CPU 0 and a CPU 1 that are shown in FIG. 9.

The memory 702 may be a read-only memory (read-only memory , ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a magnetic disk storage medium or another magnetic storage device, or any other medium capable of carrying or storing expected program code in a form of an instruction or a data structure and capable of being accessed by a computer, but is not limited thereto.

In a possible implementation, the memory 702 may be independent of the processor 701. The memory 702 may be connected to the processor 701 through the bus 704, and is configured to store data, instructions, or program code. When invoking and executing the instructions or the program code stored in the memory 702, the processor 701 can implement a machine learning model management method provided in embodiments of this application, for example, the machine learning model management method shown in FIG. 10.

In another possible implementation, the memory 702 may alternatively be integrated with the processor 701.

The communication interface 703 is configured to connect the computer device 70 to another device through a communication network, where the communication network may be an Ethernet, a radio access network (radio access network, RAN), a wireless local area network (wireless local area network, WLAN), or the like. The communication interface 703 may include a receiving unit configured to receive data and a sending unit configured to send data.

The bus 704 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

It should be noted that the structure shown in FIG. 9 does not constitute a limitation on the computer device 70. The computer device 70 may include more or fewer components than those shown in the figure in addition to the components shown in FIG. 9, some components may be combined, or the computer device 70 may have a different component arrangement.

FIG. 10 is a schematic diagram of interaction in a machine learning model management method according to an embodiment of this application.

The method shown in FIG. 10 may be applied to the machine learning model management system 40 shown in FIG. 3. The machine learning model management system 40 may be deployed on the network system 30 shown in FIG. 4 or FIG. 8.

The method shown in FIG. 10 may include the following steps S101 to S105.

S101: A machine learning model management center sends a first machine learning model to a first federated learning server. The first federated learning server may be any federated learning server connected to the machine learning model management center.

The first machine learning model is a machine learning model that corresponds to a model service and that is stored in the machine learning model management center. The machine learning model corresponding to the model service may be updated. The first machine learning model may be an initial machine learning model that corresponds to the model service and that is stored in the machine learning model management center, or may be a non-initial machine learning model that corresponds to the model service and that is stored in the machine learning model management center. For a specific example of the first machine learning model, refer to an embodiment shown in FIG. 11A and FIG. 11B.

Optionally, S101 may include: The machine learning model management center sends a machine learning model package to the first federated learning server, where the machine learning model package includes the first machine learning model (namely, a model file).

Further optionally, the machine learning model management center sends the machine learning model package to the first federated learning server based on the REST protocol. In addition, the machine learning model package may further include a description file of the first machine learning model.

Optionally, the machine learning model package sent by the machine learning model management center to the first federated learning server may be a machine learning model package on which encryption, scrambling, and/or another security processing operation have/has been performed, to reduce a risk that the machine learning model package is stolen and modified in a transmission process, thereby improving security of the machine learning model package.

Based on this, after receiving an encrypted machine learning model package, the first federated learning server may decrypt the encrypted machine learning model package. After receiving a scrambled machine learning model package, the first federated learning server may descramble the scrambled machine learning model package.

Optionally, a secure private line or the like may be used in a process in which the machine learning model management center transmits the machine learning model package to the first federated learning server, to reduce the risk that the machine learning model package is stolen and modified in the transmission process, thereby improving the security of the machine learning model package.

A trigger condition of S101 is not limited in this embodiment of this application. The following enumerates two implementations.

Manner 1: The machine learning model management center sends the first machine learning model to the first federated learning server at a request of the first federated learning server.

Specifically, the first federated learning server sends machine learning model requirement information to the machine learning model management center. For example, the first federated learning server sends the machine learning model requirement information to the machine learning model management center based on the REST protocol. Then, the machine learning model management center determines the first machine learning model based on the machine learning model requirement information.

That is, the first federated learning server obtains the first machine learning model any time the federated learning server needs to use the first machine learning model (to be specific, the first federated learning server obtains the first machine learning model from the machine learning model management center only when requiring the first machine learning model). This helps save storage space of a device in which the first federated learning server is located.

Optionally, the machine learning model requirement information includes model service information corresponding to the machine learning model and/or a machine learning model training requirement.

Optionally, the machine learning model training requirement includes at least one of the following: a training environment, an algorithm type, a network structure, a training framework, an aggregation algorithm, or a security mode.

The machine learning model management center may maintain a correspondence between an identifier of a machine learning model and description information of the machine learning model. A specific representation form of the correspondence is not limited in this embodiment of this application. For example, the machine learning model management center may represent the correspondence in a table form or the like.

Table 2 lists an example of the correspondence between an identifier of a machine learning model and description information of the machine learning model according to this embodiment of this application.

**Table 2**

| Identifier of a machine learning model | Description information of the machine learning model | | | | | | |
|---|---|---|---|---|---|---|---|
| | Model service information | Machine learning model training requirement | | | | | |
| | | Training environment | Algorithm type | Network structure | Training framework | Aggregation algorithm | Security mode |
| Machine learning model 1 | Model service information 1 | Training environment 1 | Algorithm type 1 | Network structure 1 | Training framework 1 | Aggregation algorithm 1 | Security mode 1 |
| Machine learning model 2 | Model service information 1 | Training environment 1 | Algorithm type 1 | Network structure 1 | Training framework 2 | Aggregation algorithm 1 | Security mode 1 |
| Machine learning model 3 | Model service information 2 | Training environment 1 | Algorithm type 2 | Network structure 2 | Training framework 1 | Aggregation algorithm 2 | Security mode 2 |
| Machine learning model 4 | Model service information 2 | Training environment 2 | ... | ... | ... | ... | ... |

For example, the machine learning model management center may search the "correspondence between an identifier of a machine learning model and description information of the machine learning model", for example, search Table 2, based on the machine learning model requirement information sent by the first federated learning server, to determine an identifier of the first machine learning model; and then search a "correspondence between an identifier of a machine learning model and a machine learning model package", for example, search Table 1, to obtain a model package of the first machine learning model. Next, the machine learning model management center sends the model package of the first machine learning model to the first federated learning server.

It should be noted that because a description file of a machine learning model includes description information of the machine learning model, in an example, Table 2 may be essentially considered as a part of Table 1.

Table 3 lists a specific example of the correspondence, listed in Table 2, between an identifier of a machine learning model and description information of the machine learning model.

**Table 3**

| Identifier of a machine learning model | Description information of the machine learning model | | | | | | |
|---|---|---|---|---|---|---|---|
| | Model service information | Machine learning model training requirement | | | | | |
| | | Training environment | Algorithm type | Network structure | Training framework | Aggregation algorithm | Security mode |
| SA 001 | Service awareness type | EPSN | CNN | Input layer: 100 Output layer: 300 Hidden layer: 5 | TensorFlow | Weighted averaging algorithm | MPC |
| SA 002 | Service awareness type | EPSN | CNN | Input layer: 100 Output layer: 300 Hidden layer: 5 | Caffe | Weighted averaging algorithm | MPC |

(continued)

| Identifier of a machine learning model | Description information of the machine learning model | | | | | | |
|---|---|---|---|---|---|---|---|
| | Model service information | Machine learning model training requirement | | | | | |
| | | Training environment | Algorithm type | Network structure | Training framework | Aggregation algorithm | Security mode |
| KPI 001 | KPI anomaly detection type | uCPE | LSTM | Input layer: 10 Output layer: 50 Hidden layer: 3 | Caffe | Weighted averaging algorithm | No (that is, no security mode is used) |
| KPI 002 | KPI anomaly detection type | IMS | RNN | Input layer: 200 Output layer: 20 Hidden layer: 10 | TensorFlow | Weighted averaging algorithm | SHA256 |

The "input layer: 100, output layer: 300, hidden layer: 5" indicates that dimensions of an input layer, an output layer, and a hidden layer of a neural network are respectively 100, 300, and 5. Explanations of another network structure are similar to the explanations herein, and details are not described herein again.

In an example, it is assumed that the first federated learning server determines that the machine learning model training requirement is: The model service information corresponding to the machine learning model is the service awareness type, the training environment of the machine learning model is the EPSN, the type of an algorithm used for training the machine learning model is the CNN, a structure of the CNN is the "input layer: 100, output layer: 300, hidden layer: 5", a training framework of the CNN is the TensorFlow, and the security mode of the machine learning model is the MPC. In this case, it can be learned from Table 3 that the first machine learning model determined by the machine learning model management center is a machine learning model indicated by the "SA 001".

Manner 2: The machine learning model management center actively pushes the first machine learning model to the first federated learning server.

In this way, when needing to use the first machine learning model, the first federated learning server may directly obtain the first machine learning model locally, and does not need to request the first machine learning model from the machine learning model management center. Therefore, this helps reduce a time period for obtaining the first machine learning model.

A trigger condition for the machine learning model management center to actively push the first machine learning model to the first federated learning server is not limited in this embodiment of this application. For example, after replacing the first machine learning model with a new machine learning model, the machine learning model management center may actively push the new machine learning model to the first federated learning server. For another example, the machine learning model management center may actively push the first machine learning model to the first federated learning server when creating the first machine learning model for the first time.

It should be noted that the manner 1 and the manner 2 may alternatively be used in combination to form a new embodiment.

S102: The first federated learning server performs federated learning with a plurality of federated learning clients in a first management domain based on the first machine learning model and local network service data in the first management domain, to obtain a second machine learning model. The plurality of federated learning clients are some or all federated learning clients connected to the first federated learning server. The first federated learning server is in the first management domain.

The local network service data is network service data that corresponds to the first machine learning model in the first management domain and that is obtained by the first federated learning server. The local network service data is related to the model service information corresponding to the first machine learning model. For example, if the model service corresponding to the first machine learning model is a service awareness service, the local network service data may be an application packet and/or statistical data of the packet (for example, a packet loss rate of the packet). For another example, if the model service corresponding to the first machine learning model is a fault tracing and prediction service, the local network service data may be fault alarm information.

S102 may include: The first federated learning server performs federated learning with the plurality of federated learning clients in the first management domain for one or more times based on the first machine learning model and the local network service data in the first management domain, to obtain the second machine learning model.

One time of federated learning is a process from sending an initial machine learning model to a plurality of federated learning clients by a federated learning server to obtaining, by the federated learning server, intermediate machine learning models respectively obtained by the plurality of federated learning clients and aggregating the obtained intermediate machine learning models to obtain an aggregated machine learning model.

In one federated learning process, a model on which the federated learning client starts to perform model training is referred to as the initial machine learning model.

In one federated learning process, the federated learning client performs one or more times of local training based on the initial machine learning model and a training sample constructed based on network service data obtained by the federated learning client, and obtains a new machine learning model after each time of local training ends. If the new machine learning model meets a first preset condition, the new machine learning model is referred to as the intermediate machine learning model. If the new machine learning model does not meet a first preset condition, the federated learning client continues to perform local training until the intermediate machine learning model is obtained.

In an example, if accuracy of the new machine learning model is greater than or equal to a first preset threshold when the federated learning client tests the new machine learning model by using a test sample constructed based on the network service data obtained by the federated learning client, the federated learning client determines that the new machine learning model meets the first preset condition.

In another example, when the federated learning client tests the new machine learning model by using a test sample constructed based on the network service data obtained by the federated learning client, if a difference between accuracy of the new machine learning model and accuracy of a machine learning model obtained through local training for the last time (or for the last several times) is less than or equal to a second preset threshold, the federated learning client determines that the new machine learning model meets the first preset condition.

In another example, if a quantity of times of local training reaches a third preset threshold, the federated learning client determines that the new machine learning model meets the first preset condition.

Values of the first preset threshold, the second preset threshold, and the third preset threshold are not limited in this embodiment of this application.

In one federated learning process, a model obtained by the federated learning server by performing model aggregation on the intermediate machine learning models obtained by the plurality of federated learning clients is referred to as the aggregated machine learning model. If the aggregated machine learning model meets a second preset condition, the aggregated machine learning model is used as the second machine learning model. If the aggregated machine learning model does not meet a second preset condition, the federated learning server delivers, to the plurality of federated learning clients, the aggregated machine learning model as an initial machine learning model for next time of federated learning.

In an example, if accuracy of the aggregated machine learning model is greater than or equal to a fourth preset threshold when the federated learning server tests the aggregated machine learning model by using a test sample constructed based on the network service data obtained by the federated learning server, the federated learning server determines that the aggregated machine learning model meets the second preset condition.

In another example, when the federated learning server tests the aggregated machine learning model by using a test sample constructed based on the network service data obtained by the federated learning server, if a difference between accuracy of the aggregated machine learning model and accuracy of an aggregated machine learning model obtained for the last time (or for the last several times) is less than or equal to a fifth preset threshold, the federated learning server determines that the aggregated machine learning model meets the second preset condition.

In another example, if a quantity of times of federated learning reaches a sixth preset threshold, the federated learning server determines that the aggregated machine learning model meets the second preset condition.

Values of the fourth preset threshold, the fifth preset threshold, and the sixth preset threshold are not limited in this embodiment of this application.

Optionally, as shown in FIG. 11A and FIG. 11B, step S102 may include the following steps S 102A to S102G. In FIG. 11A and FIG. 11B, descriptions are provided by using an example in which the plurality of federated learning clients in the first management domain include a first federated learning client and a second federated learning client. Based on FIG. 11A and FIG. 11B, a relationship between the first machine learning model, the initial machine learning model, the intermediate machine learning model, the aggregated machine learning model, and the second machine learning model may be described more clearly.

S102A: The first federated learning server separately sends the first machine learning model to the first federated learning client and the second federated learning client.

For example, the first federated learning server sends the model package of the first machine learning model to the first federated learning client. The model package includes the model file of the first machine learning model. Optionally, the model package may further include the description file of the first machine learning model. Similarly, the first federated learning server sends the model package of the first machine learning model to the second federated learning client. The model package includes the model file of the first machine learning model. Optionally, the model package may further include the description file of the first machine learning model.

S102B: The first federated learning client performs local training on the first machine learning model as the initial machine learning model based on network service data obtained by the first federated learning client, to obtain a first intermediate machine learning model. The second federated learning client performs local training on the first machine learning model as the initial machine learning model based on network service data obtained by the second federated learning client, to obtain a second intermediate machine learning model.

Specifically, if the federated learning client is deployed on a network device (as shown in FIG. 4), the network service data obtained by the federated learning client is specifically network service data generated by the network device. For another example, if the federated learning client is deployed on a management and control system (as shown in FIG. 8), the network service data obtained by the federated learning client is specifically network service data that is obtained by the management and control system and that is generated and reported by one or more network devices managed by the management and control system.

Specifically, assuming that the first federated learning client is deployed on the network device 303 -21, and the second federated learning client is deployed on the network device 303-22, the first federated learning client performs local training on the first machine learning model as an initial machine learning model in a current federated learning process by using a local computing resource of the network device 303-21 and network service data generated by the network device 303-21, to obtain the first intermediate machine learning model. Similarly, the second federated learning client performs local training on the first machine learning model based on network service data generated by the network device 303-22, to obtain the second intermediate machine learning model.

S102C: The first federated learning client sends parameter update information of the first intermediate machine learning model relative to the initial machine learning model to the first federated learning server. The second federated learning client sends parameter update information of the second intermediate machine learning model relative to the initial machine learning model to the first federated learning server.

For example, still using the example in S102B, the first federated learning client packs the parameter update information of the first intermediate learning model relative to the initial machine learning model into a first parameter update file, and sends the first parameter update file to the first federated learning server. For example, assuming that the first machine learning model includes a parameter A and a parameter B, values of the parameter A and the parameter B are respectively a1 and b1, and values of the parameter A and the parameter B that are included in the first intermediate learning model obtained by the first federated learning client by performing local training are respectively a2 and b2, the parameter update information of the first intermediate learning model relative to the initial machine learning model includes update information a2-a1 of the parameter A and update information b2-b1 of the parameter B. Similarly, the second federated learning client packs the parameter update information of the second intermediate learning model relative to the first machine learning model into a second parameter update file, and sends the second parameter update file to the first federated learning server.

S102D: The first federated learning server obtains the first intermediate machine learning model based on the initial machine learning model and the parameter update information sent by the first federated learning client. The first federated learning server obtains the second intermediate machine learning model based on the initial machine learning model and the parameter update information sent by the second federated learning client. Then, the first federated learning server performs model aggregation on the first intermediate machine learning model and the second intermediate machine learning model by using the aggregation algorithm, to obtain the aggregated machine learning model.

For example, still using the example in S102C, the first federated learning server obtains the value a2 of the parameter A of the first intermediate machine learning model based on the update information a2-a1 of the parameter A and the value a1 of the parameter A of the initial machine learning model, and obtains the value b2 of the parameter B of the first intermediate machine learning model based on the update information b2-b1 of the parameter B and the value b 1 of the parameter B of the initial machine learning model. Further, the first federated learning server respectively assigns the parameter A and the parameter B of the initial machine learning model with the values a2 and b2, to obtain the first intermediate machine learning model. Similarly, the first federated learning server may obtain the second intermediate machine learning model based on the initial machine learning model and the parameter update information sent by the second federated learning client.

Optionally, the aggregation algorithm may be the weighted averaging algorithm. For example, the first federated learning server specifies, based on completeness of both the network service data obtained by the first federated learning client and the network service data obtained by the second federated learning client, weights of the parameter update information reported by the first federated learning client and the second federated learning client, to perform weighted summation on parameter update information reported by the first federated learning client and the second federated learning client for a same parameter, and then perform averaging, to obtain parameter update information for the parameter.

It should be noted that different aggregation algorithms may be used to train different machine learning models, to meet different federated learning training targets, for example, to reduce a quantity of cyclic iterations. The federated learning server may further formulate, based on the parameter update information, a training policy for the federated learning client in a next federated learning process in addition to performing model aggregation calculation.

In addition, it should be noted that S102C and S102D are an implementation in which the federated learning server obtains the plurality of intermediate machine learning models obtained by the plurality of federated learning clients. Certainly, a specific implementation is not limited thereto. For example, the federated learning client may directly send the intermediate machine learning model to the federated learning server.

S102E: The first federated learning server determines whether the aggregated machine learning model meets the second preset condition.

If the aggregated machine learning model does not meet the second preset condition, S102F is performed. If the aggregated machine learning model meets the second preset condition, S102G is performed.

S102F: The first federated learning server determines the aggregated machine learning model as a first machine learning model. After S102F is performed, the process returns to S102A.

S102G: The first federated learning server determines the aggregated machine learning model as the second machine learning model.

S103: The first federated learning server separately sends the second machine learning model (namely, a model file of the second machine learning model) to the first federated learning client and the second federated learning client.

For example, the first federated learning server sends a model package of the second machine learning model to the first federated learning client. The model package includes the model file of the second machine learning model. Optionally, the model package may further include a description file of the second machine learning model. Similarly, the first federated learning server sends the model package of the second machine learning model to the second federated learning client. The model package includes the model file of the second machine learning model. Optionally, the model package may further include the description file of the second machine learning model.

Then, the plurality of federated learning clients may execute, based on the second machine learning model, a model service corresponding to the second machine learning model. For example, if the second machine learning model is the service awareness model, the plurality of federated learning clients may identify an application based on the second machine learning model.

S104: The first federated learning server sends the second machine learning model to the machine learning model management center, to enable the second machine learning model to be used by a device in a second management domain.

In other words, when the technical solution provided in this embodiment of this application is applied to a network system (for example, the network system shown in FIG. 4 or FIG. 8), the second machine learning model may be used by a device in another management domain.

In an implementation, the device in the second management domain may be a device on which a second federated learning server is deployed. The second federated learning server is in the second management domain. In other words, the second machine learning model may be used by the second federated learning server in the second management domain.

The second federated learning server may be any federated learning server that has permission to use the second machine learning model. During specific implementation, which federated learning server or servers has/have permission to access the second machine learning model may be predefined, or may be determined by the federated learning server that generates the second machine learning model (namely, the first federated learning server). Optionally, the first federated learning server may further send access permission information of the second machine learning model to the machine learning model management center. Subsequently, the machine learning model management center may generate the model package of the second machine learning model based on the access permission information.

The access permission information is information for representing the federated learning server that is allowed to use the second machine learning model. A specific implementation of the access permission information is not limited in this embodiment of this application. For example, the access permission information may be an identifier of the federated learning server that is allowed to use the second machine learning model. For another example, if the second machine learning model can be used by all other federated learning servers, the access permission information may be predefined information "indicating that the second machine learning model can be used by all the other federated learning servers".

Optionally, if the second machine learning model can be used by all the other federated learning servers, the first federated learning server may not send the access permission information of the second machine learning model to the machine learning model management center.

Certainly, the second machine learning model may also continue to be used by the first federated learning server.

In another implementation, the device in the second management domain may be a device on which a federated learning client is deployed. The federated learning client is in the second management domain. The federated learning client may be any federated learning client that has the permission to use the second machine learning model. In other words, the second machine learning model may be used by the federated learning client in the second management domain.

In another implementation, the device in the second management domain may alternatively be a model service execution device (namely, a device capable of executing a corresponding model service by using a machine learning model). After obtaining the second machine learning model from the machine learning model management center, the device may execute the corresponding model service (for example, the service awareness service) based on the second machine learning model and network data in the second management domain. This means that although a carrier (for example, a virtual carrier) does not have a federated learning server or client, the carrier can still obtain, from the machine learning model management center, a machine learning model provided by a federated learning server of another carrier.

Optionally, S 104 may include the following S104A to S104C.

S104A: The first federated learning server obtains an application effect of the second machine learning model.

The application effect of the second machine learning model may be understood as a trial effect of the second machine learning model. For example, the first federated learning server tries the second machine learning model based on the network service data in the management domain to which the first federated learning server belongs, to obtain the trial effect (namely, the application effect) of the second machine learning model.

Specifically, the first federated learning server sends the second machine learning model to the plurality of federated learning clients connected to the first federated learning server, and each of the plurality of federated learning clients executes, based on the second machine learning model and network service data obtained by the federated learning client, the model service corresponding to the second machine learning model, to obtain an execution result, and sends the execution result to the first federated learning server. The first federated learning server summarizes a plurality of execution results sent by the plurality of federated learning clients, to obtain the trial effect (namely, the application effect) of the second machine learning model.

A rule for the summarization is not limited in this embodiment of this application.

The execution result varies as the model service corresponding to the second machine learning model varies.

In an example, when the model service corresponding to the second machine learning model is an identification service (for example, the service awareness service), the execution result may be an identification rate of the second machine learning model, namely, a proportion of objects that can be identified by the second machine learning model in objects that participate in identification. For example, the service awareness service is specifically identifying an application (for example, a video playback application) to which a packet belongs. When the model service corresponding to the second machine learning model is the service awareness service, the first federated learning server learns through summarization that a packets are input into the second machine learning model in a preset time period, and the second machine learning model identifies an application to which each of b packets belongs, where a>b, and both a and b are integers. In this case, the identification rate of the second machine learning model is $\frac{b}{a}$ .

In another example, when the model service corresponding to the second machine learning model is an identification service (for example, the service awareness service), the execution result may be a quantity of packets that are not identified by the second machine learning model in a time period, a proportion of objects that cannot be identified by the second machine learning model in objects that participate in identification, or the like.

It should be noted that the identification service may be replaced with a prediction service (for example, the fault tracing and prediction service). In this case, the execution result may be a prediction rate of the second machine learning model, namely, a proportion of objects that can be predicted by the second machine learning model in objects that participate in prediction. Alternatively, the identification service may be replaced with a detection service (for example, a KPI anomaly detection service). In this case, the execution result may be a detection rate of the second machine learning model. Certainly, the identification service may alternatively be replaced with a service of another type. In this case, a specific implementation of the execution result may be inferred based on the example in S104A.

S104B: If it is determined that the application effect meets a preset condition, the first federated learning server sends the second machine learning model to the machine learning model management center.

That the application effect of the second machine learning model meets a preset condition may be understood as: The application effect of the second machine learning model reaches a preset target. The preset target varies as the model service corresponding to the second machine learning model varies.

For example, if the model service corresponding to the second machine learning model is the service awareness service, the execution result may be the identification rate of the second machine learning model. In this case, that the application effect of the second machine learning model reaches a preset target may be: The identification rate of the second machine learning model is greater than or equal to a preset identification rate, or the identification rate of the second machine learning model is greater than or equal to a historical identification rate, where the historical identification rate may be an identification rate of the first machine learning model or the like.

S104C: If it is determined that the application effect does not meet the preset condition, the first federated learning server performs a new round of federated learning with the plurality of federated learning clients based on the second machine learning model and new local network service data, to obtain a new second machine learning model. The "new local network service data" herein is relative to the local network service data used in a process of obtaining the second machine learning model through training.

Subsequently, the first federated learning server may determine whether an application effect of the new second machine learning model meets the preset condition. The rest can be deduced by analogy until an application effect of a new second machine learning model obtained at a specific time meets the preset condition. The first federated learning server sends, to the machine learning model management center, the new second machine learning model that meets the preset condition.

This helps improve precision/accuracy of the machine learning model sent by the first federated learning server to the machine learning model management center, to further shorten a convergence time period of the machine learning model when another federated learning client performs federated learning by using the machine learning model.

S105: The machine learning model management center replaces the first machine learning model with the second machine learning model.

Specifically, the machine learning model management center replaces the model package of the first machine learning model with the model package of the second machine learning model. More specifically, the machine learning model management center replaces the model file of the first machine learning model with the model file of the second machine learning model.

For example, with reference to Table 1, assuming that the first machine learning model is the machine learning model 1, the machine learning model management center replaces the machine learning model file 1 with the model file of the second machine learning model. In this way, when the machine learning model management center subsequently needs to send the machine learning model 1 to a device in the first management domain or a device in another management domain, for example, the first federated learning server or another federated learning server (for example, the second federated learning server), the machine learning model management center may send the model file of the second machine learning model.

Optionally, if the second machine learning model cannot be used by devices in all management domains, that the machine learning model management center sends the second machine learning model to the device in the second management domain (including sending the second machine learning model at a request of the device and actively pushing the second machine learning model) may include: When determining that the second management domain has the permission to use the second machine learning model, the machine learning model management center sends the second machine learning model to the device in the second management domain.

For example, if the second machine learning model cannot be used by all federated learning servers, that the machine learning model management center sends the second machine learning model to the second federated learning server (including sending the second machine learning model at a request of the second federated learning server and actively pushing the second machine learning model) may include: When determining that the second federated learning server has the permission to use the second machine learning model, the machine learning model management center sends the second machine learning model to the second federated learning server.

Optionally, before S105, the method further includes: The machine learning model management center performs virus scanning, sensitive word scanning, or another operation on the received second machine learning model, to determine that the second machine learning model is not modified in a transmission process, thereby determining security of the second machine learning model. The machine learning model management center may alternatively determine, based on a network security evaluation report made by third-party software, whether the second machine learning model is secure. In S105, when determining that the second machine learning model is secure, the machine learning model management center may replace the first machine learning model with the second machine learning model.

In addition, the machine learning model management center may alternatively perform a model format check on the second machine learning model, to determine that the second machine learning model is from a trusted authenticated network, thereby determining security of the second machine learning model. For example, the machine learning model management center may maintain an identifier of the authenticated network, and determine, based on the maintained identifier of the authenticated network, whether the second machine learning model comes from the authenticated network. If the second machine learning model comes from the authenticated network, it indicates that the second machine learning model is secure; if the second machine learning model does not come from the authenticated network, it indicates that the second machine learning model is insecure.

Optionally, a process in which the second federated learning server in the second management domain uses the second machine learning model may include:

First, the machine learning model management center sends the second machine learning model to the second federated learning server.

For example, the machine learning model management center sends the second machine learning model to the second federated learning server at a request of the second federated learning server. For a specific implementation thereof, refer to the foregoing descriptions of the manner 1, and details are not described herein again. Alternatively, the machine learning model management center actively pushes the second machine learning model to the second federated learning server. For a specific implementation thereof, refer to the foregoing descriptions of the manner 2, and details are not described herein again.

Then, the second federated learning server performs federated learning with a plurality of federated learning clients in the second management domain based on the second machine learning model and local network data in the second management domain, to obtain a third machine learning model. For a specific implementation thereof, refer to the foregoing descriptions of FIG. 11A and FIG. 11B, and details are not described herein again.

A subsequent process is as follows:

The second federated learning server may send the third machine learning model to the machine learning model management center, and the machine learning model management center may replace the second machine learning model with the third machine learning model, to enable the third machine learning model to be used by a device in a third management domain. The third management domain is different from the second management domain. The third management domain may be the same as or different from the first management domain. Certainly, the third machine learning model may also be used by the device in the second management domain.

Furthermore, the second federated learning server may send the third machine learning model to the federated learning client connected to the second federated learning server, and the federated learning client may execute, based on the third machine learning model, a model service corresponding to the third machine learning model.

It may be understood that the optional implementation may also be considered as an example in which the second federated learning server in the second management domain and the federated learning client in the second management domain share the second machine learning model.

Optionally, a process in which the federated learning client in the second management domain uses the second machine learning model may include:

First, the machine learning model management center sends the second machine learning model to the federated learning client in the second management domain.

For example, the machine learning model management center may send the second machine learning model to the federated learning client in the second management domain when receiving a request sent by the federated learning client. For another example, the machine learning model management center may actively push the second machine learning model to the federated learning client in the second management domain.

Then, the federated learning client in the second management domain may execute, based on the second machine learning model, the model service corresponding to the second machine learning model.

This optional implementation may be applied to a scenario in which the machine learning model management center directly controls the federated learning client without using the federated learning server.

Optionally, the method may further include the following steps S106 and S107:

S106: The machine learning model management center generates the model package of the second machine learning model based on the second machine learning model. The model package includes the model file of the second machine learning model and the description file of the second machine learning model.

For example, the machine learning model management center generates the description file for the second machine learning model. The description file may include the access permission for the second machine learning model, description information of the second machine learning model, a running script of the second machine learning model, and the like. Then, the machine learning model management center packs the model file of the second machine learning model and the description file of the second machine learning model according to a packaging specification for a machine learning model package, to generate the model package of the second machine learning model.

S107: The machine learning model management center signs the model package of the second machine learning model, to obtain a signature file of the model package of the second machine learning model.

S107 is performed for integrity protection of the model package of the second machine learning model, to indicate that the model package of the second machine learning model is from the machine learning model management center instead of another device/system.

Based on this, when sending the model package of the second machine learning model to any federated learning server, the machine learning model management center may further send the signature file of the model package to the federated learning server, so that the federated learning server can determine, based on the signature file, whether the model package is from the machine learning model management center. Certainly, when sending the model package of the first machine learning model to the first federated learning server, the machine learning model management center may further send a signature file of the model package to the first federated learning server.

Optionally, the second machine learning model is a machine learning model based on a first training framework. Based on this, the method may further include the following step 1:

Step 1: The machine learning model management center converts the second machine learning model into the third machine learning model. The third machine learning model is a machine learning model based on a second training framework, and the third machine learning model and the second machine learning model correspond to same model service information.

Optionally, the machine learning model management center translates, by using a model conversion tool, algorithm implementation code, a parameter, and the like in the model file of the second machine learning model that is based on the first training framework into corresponding algorithm implementation code and a corresponding parameter that are based on the second training framework. The model conversion tool may be implemented by software and/or hardware.

In other words, the machine learning model management center converts the machine learning model supported by the first training framework into the machine learning model supported by the second training framework. For example, when the first training framework is the TensorFlow training framework, and the second training framework is the Pytorch training framework, information, namely, a relu activation layer (operation unit), may be translated into torch.nn.ReLu().

Further optionally, if the machine learning model management center further stores a fifth machine learning model, the fifth machine learning model is a machine learning model based on the second training framework, and the fifth machine learning model and the first machine learning model correspond to the same model service information, the method may further include the following step 2:

Step 2: The machine learning model management center replaces the fifth machine learning model with the third machine learning model.

It may be understood that machine learning models corresponding to same model service information may correspond to different training frameworks. Based on this, when replacing the first machine learning model with the second machine learning model, the machine learning model management center converts the second machine learning model into a machine learning model in another training framework, to provide the machine learning model for another federated learning server that supports the second training framework.

Further, if the machine learning model management center determines that the machine learning model management center maintains a machine learning model (namely, the fifth machine learning model) that is based on another training framework and that corresponds to the same model service information as the first machine learning model, the machine learning model management center may further replace the fifth machine learning model with the third machine learning model, to ensure that the machine learning model in the another training framework and for the same model service information is a latest machine learning model.

For example, the machine learning model 1 and the machine learning model 2 in Table 2 correspond to the same model service information, and a difference between the two models lies in that the two models are used in different training frameworks. If the first machine learning model is the machine learning model 1, and the fifth machine learning model is the machine learning model 2, in Table 1, when the model file of the first machine learning model (namely, the machine learning model file 1) is replaced with the model file of the second machine learning model, a model file of the fifth machine learning model (namely, the machine learning model file 2) is replaced with a model file of the third machine learning model.

For example, the machine learning model for the service awareness service may run in three AI model training frameworks. Therefore, after a machine learning model based on one of the training frameworks is replaced, the machine learning model management center may synchronously update machine learning models corresponding to the other two training frameworks.

According to the machine learning model management method provided in this embodiment of this application, the machine learning model obtained by the federated learning server by performing federated learning may be used by another federated learning server. In this way, the machine learning model does not need to be repeatedly trained by different federated learning servers, to save computing resources in terms of the entire society.

Further, the federated learning server obtains the initial machine learning model from the machine learning model management center, so that the federated learning server determines, as the initial machine learning model, a machine learning model that most meets the machine learning model training requirement, to help reduce the quantity of times of federated learning, and accelerate convergence of the machine learning model.

In addition, as time goes by, a machine learning model on the machine learning model management center can integrate performance of network service data in a plurality of management domains (that is, the machine learning model is indirectly obtained through federated learning based on the network service data in the plurality of management domains), and has much better adaptivity than a machine learning model obtained based on network service data only in a single management domain. For each management domain, a good effect can also be achieved on a model service that is executed by subsequently inputting more novel and more complex network service data.

Moreover, in this technical solution, the machine learning model is independently trained in each management domain. Therefore, if a federated learning server in a management domain is faulty, federated learning may be still performed in another management domain, and the machine learning model management center continues to update the machine learning model.

Furthermore, the federated learning server obtains the initial machine learning model from the machine learning model management center. Therefore, even if a fault occurs on a federated learning server in a management domain, the federated learning server can still obtain, from the machine learning model management center when the fault is recovered, a currently latest machine learning model for sharing (namely, an updated machine learning model obtained by the machine learning model management center together with another federated learning server during the fault) as the initial machine learning model, to help reduce the quantity of times of federated learning, and accelerate the convergence of the machine learning model.

In the conventional technology, a machine learning model is independently trained in different management domains, and the different management domains cannot share the machine learning model. Therefore, if a fault occurs on a federated learning server in a management domain, when the fault is recovered, the federated learning server can start training only from a predefined initial machine learning model, causing a large quantity of times of federated learning, and decelerate convergence of the machine learning model.

It can be learned from this that the machine learning model in this technical solution has a faster convergence speed and therefore has a stronger recovery capability after the fault on the federated learning server is recovered than the machine learning model in the conventional technology, in other words, has better robustness than the machine learning model in the conventional technology.

In addition, when the machine learning model management method provided in this embodiment of this application is applied to the network architecture shown in FIG. 4 or FIG. 8, there is only one bidirectional transmission process of the machine learning model between the public cloud and the management domain. This helps avoid a risk that the network service data is stolen caused by a plurality of transmissions of the model parameter update information, thereby improving security of the network service data in the management domain. Moreover, in this technical solution, a plurality of management domains may share a federated learning model, to reduce construction costs and maintenance costs for each management domain (for example, each telecommunications carrier network).

The following further describes implementations corresponding to FIG. 10 and FIG. 11A and FIG. 11B by using an example in which the machine learning model corresponds to the service awareness service, in other words, the machine learning model is a service awareness (SA) machine learning model.

In this embodiment, the management domain is specifically the telecommunications carrier network, the first federated learning server is deployed on an EMS 1 in a telecommunications carrier network A, the EMS 1 is configured to manage a first network device and a second network device, the first federated learning client is deployed on the first network device, the second federated learning client is deployed on the second network device, and the first federated learning client and the second federated learning client are separately connected to the first federated learning server. The second federated learning server is deployed on an EMS 2 in a telecommunications carrier network B, and a federated learning client connected to the second federated learning server is deployed on a network device managed by the EMS 2.

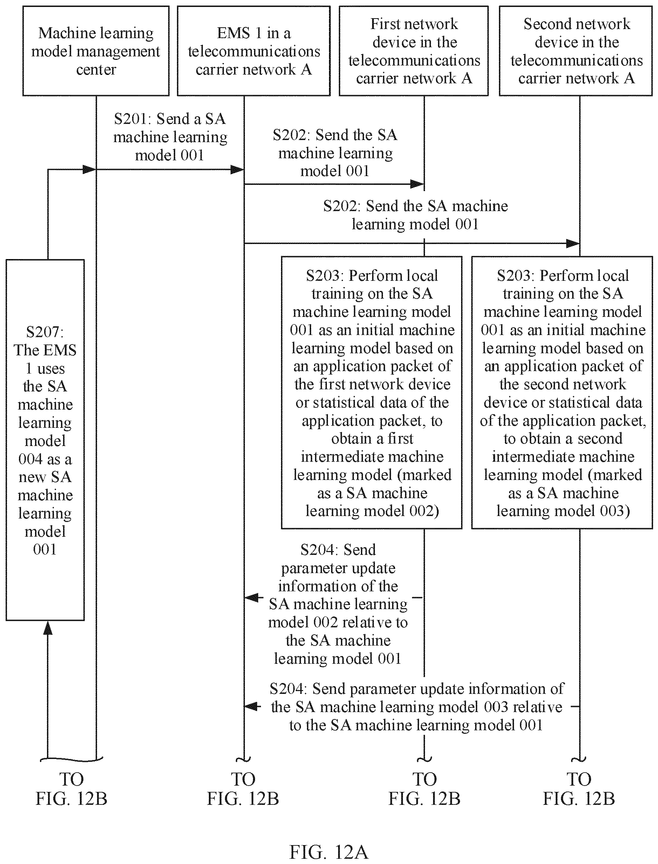

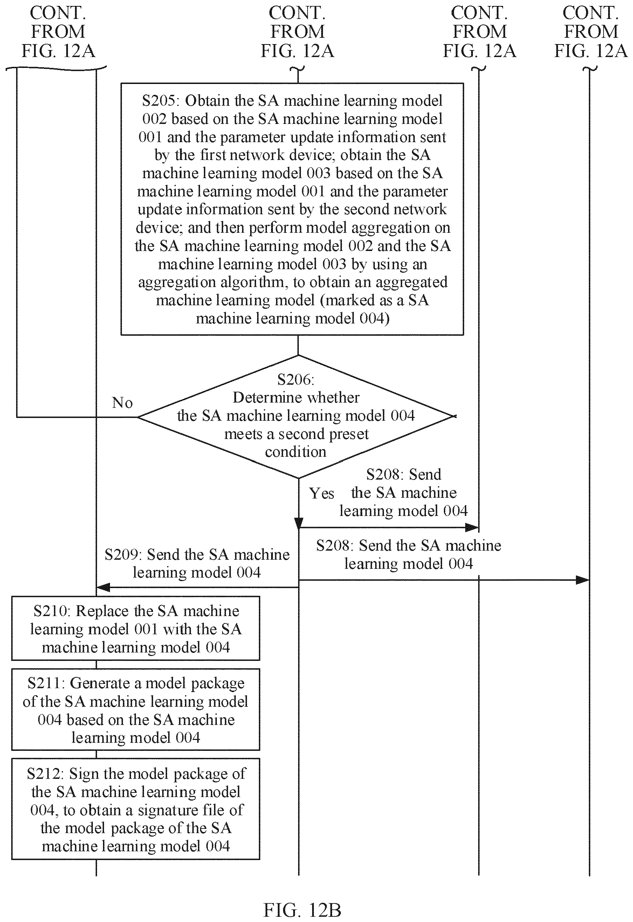

FIG. 12A and FIG. 12B are a schematic diagram of interaction in another machine learning model management method according to this embodiment of this application. The method shown in FIG. 12A and FIG. 12B may include the following steps S201 to S212.

S201: The machine learning model management center sends a SA machine learning model 001 to the EMS 1 in the telecommunications carrier network A.

S202: The EMS 1 separately sends the SA machine learning model 001 to the first network device and the second network device.

S203: The first network device performs local training on the SA machine learning model 001 as an initial machine learning model based on an application packet of the first network device or statistical data of the application packet, to obtain a first intermediate machine learning model (marked as a SA machine learning model 002). The second network device performs local training on the SA machine learning model 001 as an initial machine learning model based on an application packet of the second network device or statistical data of the application packet, to obtain a second intermediate machine learning model (marked as a SA machine learning model 003).

S204: The first network device sends parameter update information of the SA machine learning model 002 relative to the SA machine learning model 001 to the EMS 1. The second network device sends parameter update information of the SA machine learning model 003 relative to the SA machine learning model 001 to the EMS 1.

S205: The EMS 1 obtains the SA machine learning model 002 based on the SA machine learning model 001 and the parameter update information sent by the first network device. The EMS 1 obtains the SA machine learning model 003 based on the SA machine learning model 001 and the parameter update information sent by the second network device. Then, the EMS 1 performs model aggregation on the SA machine learning model 002 and the SA machine learning model 003 by using an aggregation algorithm, to obtain an aggregated machine learning model (marked as a SA machine learning model 004).

S206: The EMS 1 determines whether the SA machine learning model 004 meets a second preset condition. For related descriptions of the second preset condition, refer to the related descriptions in S102. Details are not described herein again.

If the SA machine learning model 004 does not meet the second preset condition, S207 is performed. If the SA machine learning model 004 meets the second preset condition, the SA machine learning model 004 is a second machine learning model, and S208 is performed.

S207: The EMS 1 uses the SA machine learning model 004 as a new SA machine learning model 001.

After S207 is performed, the process returns to S201.

S208: The EMS 1 separately sends the SA machine learning model 004 to the first network device and the second network device.

S209: The EMS 1 sends the SA machine learning model 004 to the machine learning model management center, to enable the SA machine learning model 004 to be used by the EMS 2 in the telecommunications carrier network B.

For example, the machine learning model management center sends the SA machine learning model 004 to the EMS 2. The EMS 2 performs, based on the SA machine learning model 004 and an application packet in the telecommunications carrier network B or statistical data of the application packet, federated learning with a plurality of network devices managed by the EMS 2, to obtain a SA machine learning model 005; and sends the SA machine learning model 005 to the plurality of network devices. Subsequently, the plurality of network devices may perform service awareness based on the SA machine learning model 005. A specific implementation process thereof may be implemented by using the foregoing S202 to S208.

S210: The machine learning model management center replaces the SA machine learning model 001 with the SA machine learning model 004.

S211: The machine learning model management center generates a model package of the SA machine learning model 004 based on the SA machine learning model 004.

S212: The machine learning model management center signs the model package of the SA machine learning model 004, to obtain a signature file of the model package of the SA machine learning model 004.

It can be learned from this that, because the EMS 1, the first network device, and the second network device in the telecommunications carrier network A perform federated learning in the telecommunications carrier network A, application packets in the telecommunications carrier network A or statistical data of the application packets (including the application packet of the first network device or the statistical data of the application packet, and the application packet of the second network device or the statistical data of the application packet) and intermediate machine learning models (such as the SA machine learning model 002 and the SA machine learning model 003) in the telecommunications carrier network A do not need to be transmitted to a third party, to improve data privacy and security.

In addition, as described in the example in S209, the network device in the telecommunications carrier network B may perform service awareness based on the SA machine learning model 005. The SA machine learning model 005 is obtained in combination with the application packet in the telecommunications carrier network B or the statistical data of the application packet, and the application packets in the telecommunications carrier network A or the statistical data of the application packets. Therefore, performing service awareness by the network device in the telecommunications carrier network B based on the SA machine learning model 005 helps improve accuracy of the service awareness.

The foregoing mainly describes the solutions provided in embodiments of this application from the perspective of the methods. To implement the foregoing functions, corresponding hardware structures and/or software modules for performing the functions are included. A person skilled in the art should be easily aware that, in combination with the examples of units and algorithm steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the machine learning model management apparatus (for example, the machine learning model management center or the federated learning server) may be divided into functional modules based on the foregoing method examples. For example, each functional module may be obtained through division based on a corresponding function, or two or more functions may be integrated into one processing module. The integrated module may be implemented by hardware, or may be implemented by a software functional module. It should be noted that, in embodiments of this application, division into the modules is an example and is merely logical function division, and may be other division in an actual implementation.

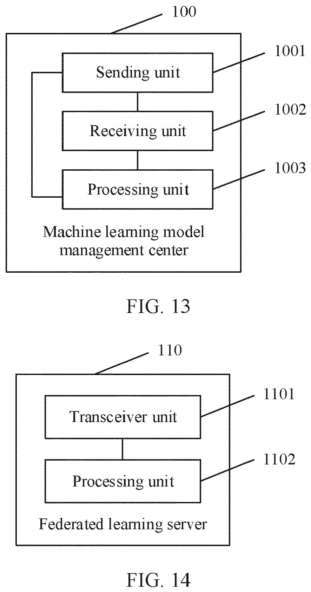

FIG. 13 is a schematic diagram of a structure of a machine learning model management center 100 according to an embodiment of this application. The machine learning model management center 100 shown in FIG. 13 may be configured to implement functions of the machine learning model management center in the foregoing method embodiments, and therefore can also implement beneficial effects of the foregoing method embodiments. In this embodiment of this application, the machine learning model management center may be the machine learning model management center 401 shown in FIG. 3.

The machine learning model management center 100 is connected to a first federated learning server, and the first federated learning server is in a first management domain.

As shown in FIG. 13, the machine learning model management center 100 includes a sending unit 1001, a receiving unit 1002, and a processing unit 1003.

The sending unit 1001 is configured to send a first machine learning model to the first federated learning server. The receiving unit 1002 is configured to receive a second machine learning model from the first federated learning server, where the second machine learning model is obtained by the first federated learning server by performing federated learning with a plurality of federated learning clients in the first management domain based on the first machine learning model and local network service data in the first management domain. The processing unit 1003 is configured to replace the first machine learning model with the second machine learning model, to enable the second machine learning model to be used by a device in a second management domain.

For example, with reference to FIG. 10, the sending unit 1001 may be configured to perform S101, and the receiving unit 1002 may be configured to perform a receiving step corresponding to S104. The processing unit 1003 may be configured to perform S105.

Optionally, the receiving unit 1002 is further configured to receive machine learning model requirement information sent by the first federated learning server. The processing unit 1003 is further configured to determine the first machine learning model based on the machine learning model requirement information.

Optionally, the machine learning model requirement information includes model service information corresponding to the machine learning model and/or a machine learning model training requirement.

Optionally, the machine learning model training requirement includes at least one of the following: a training environment, an algorithm type, a network structure, a training framework, an aggregation algorithm, or a security mode.

Optionally, the second machine learning model is a machine learning model based on a first training framework. The processing unit 1003 is further configured to convert the second machine learning model into a third machine learning model, where the third machine learning model is a machine learning model based on a second training framework, and the third machine learning model and the second machine learning model correspond to same model service information.

Optionally, the receiving unit 1002 is further configured to receive access permission information that is of the second machine learning model and that is sent by the first federated learning server.

Optionally, the sending unit 1001 is further configured to send the second machine learning model to a second federated learning server, where the second federated learning server is in the second management domain. The receiving unit 1002 is further configured to receive a fourth machine learning model from the second federated learning server, where the fourth machine learning model is obtained by the second federated learning server by performing federated learning with a plurality of federated learning clients in the second management domain based on the second machine learning model and local network service data in the second management domain. In this case, the processing unit 1003 is further configured to replace the second machine learning model with the fourth machine learning model.

For specific descriptions of the optional manners, refer to the method embodiments. Details are not described herein again. In addition, for any explanation of the machine learning model management center 100 provided above and descriptions of beneficial effects, refer to the foregoing corresponding method embodiments. Details are not described herein again.

For example, with reference to FIG. 9, functions of the sending unit 1001 and the receiving unit 1002 may be implemented by the communication interface 703. A function of the processing unit 1003 may be implemented by the processor 701 by invoking the program code in the memory 702.

FIG. 14 is a schematic diagram of a structure of a federated learning server 110 according to an embodiment of this application. The federated learning server 110 shown in FIG. 14 may be configured to implement functions of the federated learning server in the foregoing method embodiments, and therefore can also implement beneficial effects of the foregoing method embodiments. In this embodiment of this application, the federated learning server 110 may be the federated learning server shown in FIG. 3.

The federated learning server 110 is in a first management domain, and is connected to a machine learning model management center.

As shown in FIG. 14, the federated learning server 110 includes a transceiver unit 1101 and a processing unit 1102.

The transceiver unit 1101 is configured to obtain a first machine learning model from the machine learning model management center. The processing unit 1102 is configured to perform federated learning with a plurality of federated learning clients in the first management domain based on the first machine learning model and local network service data in the first management domain, to obtain a second machine learning model. The transceiver unit 1101 is further configured to send the second machine learning model to the machine learning model management center, to enable the second machine learning model to be used by a device in a second management domain.

For example, with reference to FIG. 10, the transceiver unit 1101 may be configured to perform S104 and a receiving step corresponding to S101. The processing unit 1102 may be configured to perform a step performed by the federated learning server in S102.

Optionally, the transceiver unit 1101 is specifically configured to: send machine learning model requirement information to the machine learning model management center; and receive the first machine learning model determined by the machine learning model management center based on the machine learning model requirement information.

Optionally, the machine learning model requirement information includes model service information corresponding to the machine learning model and/or a machine learning model training requirement.

Optionally, the machine learning model training requirement includes at least one of the following: a training environment, an algorithm type, a network structure, a training framework, an aggregation algorithm, or a security mode.

Optionally, the transceiver unit 1101 is further configured to send access permission information of the second machine learning model to the machine learning model management center.

Optionally, the transceiver unit 1101 is further configured to send the second machine learning model to the plurality of federated learning clients.

Optionally, the transceiver unit 1101 is specifically configured to send the second machine learning model to the machine learning model management center if an application effect of the second machine learning model meets a preset condition.

Optionally, the transceiver unit 1101 is further configured to send the first machine learning model to the plurality of federated learning clients in the first management domain, to enable each of the plurality of federated learning clients to perform federated learning based on the first machine learning model and network service data obtained by the federated learning client, to obtain an intermediate machine learning model of the federated learning client. The processing unit 1102 is specifically configured to: obtain a plurality of intermediate machine learning models obtained by the plurality of federated learning clients, and aggregate the plurality of intermediate machine learning models to obtain the second machine learning model.

For specific descriptions of the optional manners, refer to the method embodiments. Details are not described herein again. In addition, for any explanation of the federated learning server 110 provided above and descriptions of beneficial effects, refer to the foregoing corresponding method embodiments. Details are not described herein again.

For example, with reference to FIG. 9, a function of the transceiver unit 1101 may be implemented by the communication interface 703. A function of the processing unit 1102 may be implemented by the processor 701 by invoking the program code in the memory 702.

Another embodiment of this application further provides a machine learning model management apparatus. The apparatus includes a processor and a memory. The memory is configured to store a computer program and instructions. The processor is configured to invoke the computer program and the instructions, to perform corresponding steps performed by the machine learning model management center in the method procedures shown in the foregoing method embodiments.

Another embodiment of this application further provides a machine learning model management apparatus. The apparatus includes a processor and a memory. The memory is configured to store a computer program and instructions. The processor is configured to invoke the computer program and the instructions, to perform corresponding steps performed by the federated learning server in the method procedures shown in the foregoing method embodiments.

Another embodiment of this application further provides a machine learning model management apparatus. The apparatus includes a processor and a memory. The memory is configured to store a computer program and instructions. The processor is configured to invoke the computer program and the instructions, to perform corresponding steps performed by the federated learning client in the method procedures shown in the foregoing method embodiments.

Another embodiment of this application further provides a computer-readable storage medium. The computer-readable storage medium stores instructions; and when the instructions are run on a terminal, the terminal performs corresponding steps performed by the machine learning model management center, the first federated learning server, or the federated learning client in the method procedures shown in the foregoing method embodiments.

In some embodiments, the disclosed method may be implemented as computer program instructions encoded in a machine-readable format on a computer-readable storage medium or encoded on another non-transitory medium or product.

It should be understood that the arrangement described herein is merely used as an example. Thus, a person skilled in the art appreciates that other arrangement and another element (for example, a machine, an interface, a function, a sequence, and a group of functions) can be used to replace the arrangement, and some elements may be omitted together based on a desired result.

In addition, many of the described elements are function entities that can be implemented as discrete or distributed components or implemented in any suitable combination at any suitable location in combination with another component.

All or some of the foregoing embodiments may be implemented by software, hardware, firmware, or any combination thereof. When a software program is used to implement the embodiments, all or some of the embodiments may be implemented in a form of a computer program product. The computer program product includes one or more computer instructions. When the computer-executable instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A machine learning model management method, executed by a federated learning server, wherein the federated learning server is in a first management domain, and is connected to a machine learning model management center; and the method comprises:

   obtaining a first machine learning model from the machine learning model management center;
   performing federated learning with a plurality of federated learning clients in the first management domain based on the first machine learning model and local network service data in the first management domain, to obtain a second machine learning model; and
   sending the second machine learning model to the machine learning model management center, to enable the second machine learning model to be used by a device in a second management domain.

2. The method according to claim 1, wherein the obtaining a first machine learning model from the machine learning model management center comprises:

   sending machine learning model requirement information to the machine learning model management center; and
   receiving the first machine learning model determined by the machine learning model management center based on the machine learning model requirement information.

3. The method according to claim 2, wherein the machine learning model requirement information comprises model service information corresponding to the first machine learning model and/or a machine learning model training requirement.

4. The method according to claim 3, wherein the training requirement comprises at least one of the following: a training environment, an algorithm type, a network structure, a training framework, an aggregation algorithm, or a security mode.

5. The method according to any one of claims 1 to 4, wherein the method further comprises:
   sending access permission information of the second machine learning model to the machine learning model management center.

6. The method according to any one of claims 1 to 5, wherein the method further comprises:
   sending the second machine learning model to the plurality of federated learning clients.

7. The method according to any one of claims 1 to 6, wherein the sending the second machine learning model to the machine learning model management center comprises:
   sending the second machine learning model to the machine learning model management center if an application effect of the second machine learning model meets a preset condition.

8. The method according to any one of claims 1 to 7, wherein the performing federated learning with a plurality of federated learning clients in the first management domain based on the first machine learning model and local network service data in the first management domain, to obtain a second machine learning model comprises:

sending the first machine learning model to the plurality of federated learning clients in the first management domain, to enable each of the plurality of federated learning clients to perform federated learning based on the first machine learning model and network service data obtained by the federated learning client, to obtain an intermediate machine learning model of the federated learning client; and

obtaining a plurality of intermediate machine learning models obtained by the plurality of federated learning clients, and aggregating the plurality of intermediate machine learning models to obtain the second machine learning model.

9. A machine learning model management method, executed by a machine learning model management center, wherein the machine learning model management center is connected to a first federated learning server, and the first federated learning server is in a first management domain; and the method comprises:

sending a first machine learning model to the first federated learning server;

receiving a second machine learning model from the first federated learning server, wherein the second machine learning model is obtained by the first federated learning server by performing federated learning with a plurality of federated learning clients in the first management domain based on the first machine learning model and local network service data in the first management domain; and

replacing the first machine learning model with the second machine learning model, to enable the second machine learning model to be used by a device in a second management domain.

10. The method according to claim 9, wherein before the sending a first machine learning model to the first federated learning server, the method further comprises:

receiving machine learning model requirement information sent by the first federated learning server; and

determining the first machine learning model based on the machine learning model requirement information.

11. The method according to claim 10, wherein the machine learning model requirement information comprises model service information corresponding to the machine learning model and/or a machine learning model training requirement.

12. The method according to claim 11, wherein the training requirement comprises at least one of the following: a training environment, an algorithm type, a network structure, a training framework, an aggregation algorithm, or a security mode.

13. The method according to any one of claims 9 to 12, wherein the second machine learning model is a machine learning model based on a first training framework, and the method further comprises:
converting the second machine learning model into a third machine learning model, wherein the third machine learning model is a machine learning model based on a second training framework, and the third machine learning model and the second machine learning model correspond to same model service information.

14. The method according to any one of claims 9 to 13, wherein the method further comprises:
receiving access permission information that is of the second machine learning model and that is sent by the first federated learning server.

15. The method according to any one of claims 9 to 14, wherein the method further comprises:

sending the second machine learning model to a second federated learning server, wherein the second federated learning server is in the second management domain;

receiving a fourth machine learning model from the second federated learning server, wherein the fourth machine learning model is obtained by the second federated learning server by performing federated learning with a plurality of federated learning clients in the second management domain based on the second machine learning model and local network service data in the second management domain; and

replacing the second machine learning model with the fourth machine learning model.

**16.** A federated learning system, comprising a federated learning server and a plurality of federated learning clients, wherein the federated learning server and the plurality of federated learning clients are in a first management domain, and the federated learning server is connected to a machine learning model management center, wherein

the federated learning server is configured to: obtain a first machine learning model from the machine learning model management center, and send the first machine learning model to the plurality of federated learning clients; each of the plurality of federated learning clients is configured to perform federated learning based on the first machine learning model and network service data obtained by the federated learning client, to obtain an intermediate machine learning model of the federated learning client; and
the federated learning server is further configured to: obtain a plurality of intermediate machine learning models obtained by the plurality of federated learning clients, aggregate the plurality of intermediate machine learning models to obtain a second machine learning model, and send the second machine learning model to the machine learning model management center, to enable the second machine learning model to be used by a device in a second management domain.

**17.** The federated learning system according to claim 16, wherein

the federated learning server is further configured to send the second machine learning model to the plurality of federated learning clients; and
each of the plurality of federated learning clients is further configured to execute, based on the second machine learning model, a model service corresponding to the second machine learning model.

**18.** A network system, comprising a machine learning model management center, a federated learning server, and a plurality of federated learning clients, wherein the federated learning server and the plurality of federated learning clients are in a first management domain, and the federated learning server is connected to the machine learning model management center, wherein

the machine learning model management center is configured to send a first machine learning model to the federated learning server;
the federated learning server is configured to send the first machine learning model to the plurality of federated learning clients;
each of the plurality of federated learning clients is configured to perform federated learning based on the first machine learning model and network service data obtained by the federated learning client, to obtain an intermediate machine learning model of the federated learning client;
the federated learning server is further configured to: obtain a plurality of intermediate machine learning models obtained by the plurality of federated learning clients, aggregate the plurality of intermediate machine learning models to obtain a second machine learning model, and send the second machine learning model to the machine learning model management center, to enable the second machine learning model to be used by a device in a second management domain; and
the machine learning model management center is further configured to replace the first machine learning model with the second machine learning model.

**19.** The network system according to claim 18, wherein

the federated learning server is further configured to send machine learning model requirement information to the machine learning model management center; and
the machine learning model management center is further configured to send the first machine learning model to the federated learning server based on the machine learning model requirement information.

**20.** The network system according to claim 19, wherein the machine learning model requirement information comprises model service information corresponding to the machine learning model and/or a machine learning model training requirement.

**21.** The network system according to claim 20, wherein the training requirement comprises at least one of the following: a training environment, an algorithm type, a network structure, a training framework, an aggregation algorithm, or a security mode.

**22.** The network system according to any one of claims 18 to 21, wherein the second machine learning model is a machine learning model based on a first training framework; and
the machine learning model management center is further configured to convert the second machine learning model into a third machine learning model, wherein the third machine learning model is a machine learning model based on a second training framework, and the third machine learning model and the second machine learning model correspond to same model service information.

23. The network system according to any one of claims 18 to 22, wherein

the federated learning server is further configured to send the second machine learning model to the plurality of federated learning clients; and
each of the plurality of federated learning clients is further configured to execute, based on the second machine learning model, a model service corresponding to the second machine learning model.

24. A federated learning server, wherein the federated learning server is in a first management domain, and is connected to a machine learning model management center; and the federated learning server comprises:

a transceiver unit, configured to obtain a first machine learning model from the machine learning model management center; and
a processing unit, configured to perform federated learning with a plurality of federated learning clients in the first management domain based on the first machine learning model and local network service data in the first management domain, to obtain a second machine learning model, wherein
the transceiver unit is further configured to send the second machine learning model to the machine learning model management center, to enable the second machine learning model to be used by a device in a second management domain.

25. The federated learning server according to claim 24, wherein the transceiver unit is specifically configured to:

send machine learning model requirement information to the machine learning model management center; and
receive the first machine learning model determined by the machine learning model management center based on the machine learning model requirement information.

26. The federated learning server according to claim 25, wherein the machine learning model requirement information comprises model service information corresponding to the machine learning model and/or a machine learning model training requirement.

27. The federated learning server according to claim 26, wherein the training requirement comprises at least one of the following: a training environment, an algorithm type, a network structure, a training framework, an aggregation algorithm, or a security mode.

28. The federated learning server according to any one of claims 24 to 27, wherein
the transceiver unit is further configured to send access permission information of the second machine learning model to the machine learning model management center.

29. The federated learning server according to any one of claims 24 to 28, wherein
the transceiver unit is further configured to send the second machine learning model to the plurality of federated learning clients.

30. The federated learning server according to any one of claims 24 to 29, wherein
the transceiver unit is specifically configured to send the second machine learning model to the machine learning model management center if an application effect of the second machine learning model meets a preset condition.

31. The federated learning server according to any one of claims 24 to 30, wherein

the transceiver unit is further configured to send the first machine learning model to the plurality of federated learning clients, to enable each of the plurality of federated learning clients to perform federated learning based on the first machine learning model and network service data obtained by the federated learning client, to obtain an intermediate machine learning model of the federated learning client; and
the processing unit is specifically configured to: obtain a plurality of intermediate machine learning models obtained by the plurality of federated learning clients, and aggregate the plurality of intermediate machine learning models to obtain the second machine learning model.

32. A machine learning model management center, wherein the machine learning model management center is connected to a first federated learning server, and the first federated learning server is in a first management domain; and the machine learning model management center comprises:

a sending unit, configured to send a first machine learning model to the first federated learning server;
a receiving unit, configured to receive a second machine learning model from the first federated learning server, wherein the second machine learning model is obtained by the first federated learning server by performing federated learning with a plurality of federated learning clients in the first management domain based on the first machine learning model and local network service data in the first management domain; and
a processing unit, configured to replace the first machine learning model with the second machine learning model, to enable the second machine learning model to be used by a device in a second management domain.

33. The machine learning model management center according to claim 32, wherein

the receiving unit is further configured to receive machine learning model requirement information sent by the first federated learning server; and
the processing unit is further configured to determine the first machine learning model based on the machine learning model requirement information.

34. The machine learning model management center according to claim 33, wherein the machine learning model requirement information comprises model service information corresponding to the machine learning model and/or a machine learning model training requirement.

35. The machine learning model management center according to claim 34, wherein the training requirement comprises at least one of the following: a training environment, an algorithm type, a network structure, a training framework, an aggregation algorithm, or a security mode.

36. The machine learning model management center according to any one of claims 32 to 35, wherein the second machine learning model is a machine learning model based on a first training framework, and the processing unit is further configured to:
convert the second machine learning model into a third machine learning model, wherein the third machine learning model is a machine learning model based on a second training framework, and the third machine learning model and the second machine learning model correspond to same model service information.

37. The machine learning model management center according to any one of claims 32 to 36, wherein
the receiving unit is further configured to receive access permission information that is of the second machine learning model and that is sent by the first federated learning server.

38. The machine learning model management center according to any one of claims 32 to 37, wherein

the sending unit is further configured to send the second machine learning model to a second federated learning server, wherein the second federated learning server is in the second management domain;
the receiving unit is further configured to receive a fourth machine learning model from the second federated learning server, wherein the fourth machine learning model is obtained by the second federated learning server by performing federated learning with a plurality of federated learning clients in the second management domain based on the second machine learning model and local network service data in the second management domain; and
the processing unit is further configured to replace the second machine learning model with the fourth machine learning model.

39. A machine learning model management apparatus, comprising a memory and a processor, wherein the memory is configured to store computer instructions, and the processor is configured to invoke the computer instructions to perform the method according to any one of claims 1 to 15.

40. A computer-readable storage medium, wherein the computer-readable storage medium stores a computer program;

and when the computer program is run on a computer, the computer is enabled to perform the method according to any one of claims 1 to 15.

FIG. 1

FIG. 2

FIG. 3

FIG. 4

Machine learning model
management center — 401

Machine learning model
training platform — 301A

Secure communication module — 301B

Public cloud

301

## FIG. 5

Federated learning server — 403-1

Management and control basic platform — 302A

Management and control northbound interface — 302B

Management and control southbound interface — 302C

Secure communication module — 302D

Management and control system

302-2

## FIG. 6

FIG. 7

FIG. 8

FIG. 9

| Machine learning model management center | First federated learning server | Federated learning clients |
|---|---|---|

S101: Send a first machine learning model

S102: The first federated learning server performs federated learning with the plurality of federated learning clients in a first management domain based on the first machine learning model and local network service data in the first management domain, to obtain a second machine learning model

S103: Send the second machine learning model

S104: Send the second machine learning model

S105: Replace the first machine learning model with the second machine learning model

S106: Generate a model package of the second machine learning model based on the second machine learning model

S107: Sign the model package of the second machine learning model, to obtain a signature file of the model package of the second machine learning model

FIG. 10

| First federated learning server | First federated learning client | Second federated learning client |
|---|---|---|

S102A: Send a first machine learning model

S102A: Send a first machine learning model

S102B: Perform local training on the first machine learning model as an initial machine learning model based on network service data obtained by the first federated learning client, to obtain a first intermediate machine learning model

S102B: Perform local training on the first machine learning model as an initial machine learning model based on network service data obtained by the second federated learning client, to obtain a second intermediate machine learning model

S102F: Determine the aggregated machine learning model as a first machine learning model

S102C: Send parameter update information of the first intermediate machine learning model relative to the initial machine learning model

S102C: Send parameter update information of the second intermediate machine learning model relative to the initial machine learning model

TO FIG. 11B

TO FIG. 11B

TO FIG. 11B

TO FIG. 11B

FIG. 11A

CONT.
FROM
FIG. 11A

CONT.
FROM
FIG. 11A

CONT.
FROM
FIG. 11A

CONT.
FROM
FIG. 11A

S102D: Obtain the first intermediate machine learning model based on the initial machine learning model and the parameter update information sent by the first federated learning client; obtain the second intermediate machine learning model based on the initial machine learning model and the parameter update information sent by the second federated learning client; and perform model aggregation on the first intermediate machine learning model and the second intermediate machine learning model by using an aggregation algorithm, to obtain an aggregated machine learning model

No

S102E: Determine whether the aggregated machine learning model meets a second preset condition

Yes

S102G: Determine the aggregated machine learning model as a second machine learning model

FIG. 11B

| Machine learning model management center | EMS 1 in a telecommunications carrier network A | First network device in the telecommunications carrier network A | Second network device in the telecommunications carrier network A |
|---|---|---|---|

S201: Send a SA machine learning model 001

S202: Send the SA machine learning model 001

S202: Send the SA machine learning model 001

S207: The EMS 1 uses the SA machine learning model 004 as a new SA machine learning model 001

S203: Perform local training on the SA machine learning model 001 as an initial machine learning model based on an application packet of the first network device or statistical data of the application packet, to obtain a first intermediate machine learning model (marked as a SA machine learning model 002)

S203: Perform local training on the SA machine learning model 001 as an initial machine learning model based on an application packet of the second network device or statistical data of the application packet, to obtain a second intermediate machine learning model (marked as a SA machine learning model 003)

S204: Send parameter update information of the SA machine learning model 002 relative to the SA machine learning model 001

S204: Send parameter update information of the SA machine learning model 003 relative to the SA machine learning model 001

TO FIG. 12B

TO FIG. 12B

TO FIG. 12B

TO FIG. 12B

FIG. 12A

CONT.
FROM
FIG. 12A

CONT.
FROM
FIG. 12A

CONT.
FROM
FIG. 12A

CONT.
FROM
FIG. 12A

S205: Obtain the SA machine learning model 002 based on the SA machine learning model 001 and the parameter update information sent by the first network device; obtain the SA machine learning model 003 based on the SA machine learning model 001 and the parameter update information sent by the second network device; and then perform model aggregation on the SA machine learning model 002 and the SA machine learning model 003 by using an aggregation algorithm, to obtain an aggregated machine learning model (marked as a SA machine learning model 004)

S206: Determine whether the SA machine learning model 004 meets a second preset condition

No

Yes

S208: Send the SA machine learning model 004

S208: Send the SA machine learning model 004

S209: Send the SA machine learning model 004

S210: Replace the SA machine learning model 001 with the SA machine learning model 004

S211: Generate a model package of the SA machine learning model 004 based on the SA machine learning model 004

S212: Sign the model package of the SA machine learning model 004, to obtain a signature file of the model package of the SA machine learning model 004

FIG. 12B

100

Sending unit — 1001

Receiving unit — 1002

Processing unit — 1003

Machine learning model management center

FIG. 13

110

Transceiver unit — 1101

Processing unit — 1102

Federated learning server

FIG. 14

## INTERNATIONAL SEARCH REPORT

International application No.

**PCT/CN2021/110111**

### A.    CLASSIFICATION OF SUBJECT MATTER

G06N 3/04(2006.01)i

According to International Patent Classification (IPC) or to both national classification and IPC

### B.    FIELDS SEARCHED

Minimum documentation searched (classification system followed by classification symbols)

G06N, G06Q, G06F

Documentation searched other than minimum documentation to the extent that such documents are included in the fields searched

Electronic data base consulted during the international search (name of data base and, where practicable, search terms used)

CNPAT, EPODOC, WPI, IEEE, CNKI: 机器学习, 联邦学习, 隐私, 模型, 训练, 管理域, 级联, 混合, 嵌套, 作用域, Machine learning, federated learning, privacy, model, training, domain, space, Hybrid, embedded, cascaded

### C.    DOCUMENTS CONSIDERED TO BE RELEVANT

| Category* | Citation of document, with indication, where appropriate, of the relevant passages | Relevant to claim No. |
|---|---|---|
| Y | CN 111325619 A (SHENZHEN INSTITUTES OF ADVANCED TECHNOLOGY, CHINESE ACADEMY OF SCIENCES) 23 June 2020 (2020-06-23) description pages 4-7, figures 1-2, 5-7 | 1-40 |
| Y | CN 110490738 A (SHENZHEN QIANHAI WEBANK CO., LTD.) 22 November 2019 (2019-11-22) description, page 4, and figure 1 | 1-40 |
| A | US 2020293887 A1 (DOC.AI, INC.) 17 September 2020 (2020-09-17) entire document | 1-40 |
| A | CN 111243698 A (JINAN UNIVERSITY) 05 June 2020 (2020-06-05) entire document | 1-40 |
| A | CN 108830100 A (SHANDONG UNIVERSITY) 16 November 2018 (2018-11-16) entire document | 1-40 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **12 September 2021** | **28 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/110111**

| Patent document cited in search report | | | Publication date (day/month/year) | Patent family member(s) | | | Publication date (day/month/year) |
|---|---|---|---|---|---|---|---|
| CN | 111325619 | A | 23 June 2020 | None | | | |
| CN | 110490738 | A | 22 November 2019 | WO | 2021022707 | A1 | 11 February 2021 |
| US | 2020293887 | A1 | 17 September 2020 | WO | 2020185973 | A1 | 17 September 2020 |
| CN | 111243698 | A | 05 June 2020 | None | | | |
| CN | 108830100 | A | 16 November 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011212838